# EUROPEAN PATENT SPECIFICATION

(11) **EP 4 606 777 B1**
(45) Date of publication and mention of the grant of the patent: **30.09.2026**
(21) Application number: 25189015.8
(22) Date of filing: 09.03.2021
(51) Int. Cl.: B67D 1/07, B67D 1/12, B67D 1/00, B67D 1/08, C02F 1/00, C02F 9/20, C02F 1/44, C02F 1/28, C02F 1/467, C02F 1/32

(54) **WATER PURIFIER**
WASSERREINIGER
PURIFICATEUR D'EAU

(30) Priority: 17.04.2020 KR 20200046915; 12.08.2020 KR 20200100841
(43) Date of publication of application: 27.08.2025
(62) Document number(s) of the earlier application(s) in accordance with Art. 76 EPC: 21788262.0 / 4 122 874
(73) Proprietor: Samsung Electronics Co., Ltd., Suwon-si, Gyeonggi-do 16677 (KR)
(72) Inventor: Park, Jungha, Suwon-si, Gyeonggi-do 16677 (KR); Kim, Wanhoi, Suwon-si, Gyeonggi-do 16677 (KR); Lee, Junggeun, Suwon-si, Gyeonggi-do 16677 (KR); Lee, Jongho, Suwon-si, Gyeonggi-do 16677 (KR); Jang, Doyun, Suwon-si, Gyeonggi-do 16677 (KR); Cho, Yeonwoo, Suwon-si, Gyeonggi-do 16677 (KR)
(74) Representative: Gulde & Partner

(56) References cited:
- JP-A- 2009 233 591
- KR-A- 20150 052 936
- KR-A- 20190 024 760

## Description

### [Technical Field]

The present invention relates to a water purifier capable of automatically cleaning the inside and a home appliance including the water purifier.

### [Background Art]

Water purifiers are apparatuses for filtering raw water supplied from the outside and providing potable water to users. To this end, a water purifier includes elements such as at least one filter configured to filter raw water, a plurality of pipes along which the raw water or clean water flows, and a valve configured to control the flow of the raw water or the clean water.

When the water purifier is used for a long period of time, foreign matter may be stuck in the pipes or the valve or microorganisms may be formed and attached to an inner wall, and thus a smooth flow of the raw water or the clean water may be impeded, and contaminated water may be provided to a user.

Here, in a case where the time during which the water purifier is not in use becomes long according to a pattern of using the water purifier, the time during which the raw water or the clean water inside the water purifier stagnates may become long, and contamination may be accelerated.

Therefore, the conventional water purifier has adopted a method of forming sterilizing water and letting the sterilizing water flow through the pipes to clean the elements, and a user manual of the conventional water purifier guides a user to discharge water from inside the water purifier and discard the water before using the water purifier.

Documents JP 2009 233591 A, KR 2019 0024760 A and KR 2015 0052936 A constitute relevant prior art. Z

### [Disclosure]

### [Technical Problem]

It is an aspect of the present invention to provide a water purifier which automatically cleans the inside on the basis of the remaining life of a filter.

### [Technical Solution]

The present invention is directed to a water purifier according to the claims.

The water purifier may further include a flow rate sensor configured to detect a flow rate in the clean water flow path, and, in response to the flow rate in the clean water flow path being less than or equal to a predetermined value during a drainage reference time, the controller may control the drain valve to discharge stagnant water and perform the cleaning operation.

The controller may adjust the drainage reference time to decrease with a decrease in the remaining life of the filter.

The controller may adjust the drainage reference time to decrease in stages according to the remaining life of the filter.

The water purifier may further include a filter water passage flow path which includes one end connected to the filter and the other end connected to the drain port and through which raw water including impurities from the filter is drained and a filter water passage valve which is configured to open or close the filter water passage flow path.

In response to the flow rate in the clean water flow path being less than or equal to a predetermined value during the drainage reference time, the controller may control the drain valve and the filter water passage valve to drain stagnant water in the clean water flow path to the filter water passage flow path during a predetermined amount of time and may control the drain valve and the filter water passage valve to drain the stagnant water in the clean water flow path to the drain flow path after the predetermined amount of time.

In a case in which the controller receives information on an occurrence of contamination in the raw water as the external environment information through a communication device, the controller may control the filter water passage valve to open the filter water passage flow path.

The controller may control the filter water passage valve to repeat opening and closing in a predetermined cycle, and, in response to the remaining life of the filter being less than a predetermined value, the controller may stop controlling the filter water passage valve in the predetermined cycle.

In a case in which the controller receives information on an installation environment indicating an uncontaminated area as the external environment information through the communication device, the controller may control the filter water passage valve to close the filter water passage flow path.

The water purifier may further include a sterilizing water flow path which includes one end connected to the raw water flow path for the raw water to bypass the filter and the other end connected to the clean water flow path between the filter and the water discharge nozzle and in which a sterilizing water formation device configured to treat the raw water and form sterilizing water is disposed, a sterilizing water valve which is configured to open or close the sterilizing water flow path, and a clean water valve which is disposed in the clean water flow path and configured to adjust introduction of the raw water into the filter.

The controller may control the sterilizing water formation device, the sterilizing water valve, the clean water valve, and the drain valve to perform a sterilizing operation in which the sterilizing water is formed and passes through the clean water flow path and the drain flow path.

The controller may determine a cycle for repeating the sterilizing operation to be proportional to the remaining life of the filter.

In response to the flow rate in the clean water flow path being lower than or equal to a reference flow rate during drainage of water through the water discharge nozzle after an elapse of time corresponding to the determined cycle after the sterilizing operation is performed, the controller may re-perform the sterilizing operation.

In a case in which the controller receives information on an occurrence of contamination in the raw water as the external environment information through the communication device, the controller may perform the sterilizing operation or adjust the cycle for repeating the sterilizing operation to decrease.

A water purifier according to one embodiment includes a display device, a raw water flow path into which raw water is introduced from the outside, a clean water flow path connected to the raw water flow path and having a water discharge nozzle disposed at an end, a filter disposed in the clean water flow path and configured to convert the raw water to clean water, and a controller configured to determine the remaining life of the filter on the basis of a point in time at which the filter has been replaced and, in response to the remaining life of the filter being less than or equal to a first set value, control the display device to display a message requesting for replacement of the filter and, in response to the remaining life of the filter being less than or equal to a second set value which is lower than the first set value, block discharge of the clean water.

In response to the remaining life of the filter being less than or equal to a third set value which is higher than the first set value, the controller may control the display device to display the remaining life of the filter.

The water purifier may further include a filter water passage flow path which includes one end connected to the filter and the other end connected to the drain port and through which raw water including impurities from the filter is drained and a filter water passage valve which is configured to open or close the filter water passage flow path.

The controller may control the filter water passage valve to repeat opening and closing in a predetermined cycle.

In response to the remaining life of the filter being less than a predetermined value, the controller may stop controlling the filter water passage valve in the predetermined cycle.

### [Advantageous Effects]

By automatically cleaning the inside on the basis of external environment information, such as an installation environment and raw water contamination, or the remaining life of a filter, a water purifier according to one embodiment can keep the inside clean and provide clean potable water to a user and can suppress an unnecessary use of water and an overuse of a sterilizing water formation device during a cleaning process.

### [Description of Drawings]

FIG. 1 is a view illustrating a water purifier according to one embodiment of the present disclosure.
FIG. 2 is a view illustrating a home appliance (2) according to one embodiment of the present disclosure.
FIG. 3 is a control block diagram of the water purifier according to one embodiment of the present disclosure.
FIG. 4 is a view illustrating the correlation between the remaining life of a filter device and a drainage reference time according to one embodiment of the present disclosure.
FIG. 5 is a view illustrating a case in which the water purifier discharges stagnant water through a filter water passage flow path according to one embodiment of the present disclosure.
FIG. 6 is a view illustrating a membrane filter of the filter device according to one embodiment of the present disclosure.
FIG. 7 is a view illustrating a case in which the water purifier discharges stagnant water through a drain flow path according to one embodiment of the present disclosure.
FIG. 8 is a view illustrating the correlation between the remaining life of the filter device and a sterilizing operation cycle according to one embodiment of the present disclosure.
FIG. 9 is a view illustrating a case in which the water purifier forms sterilizing water during a sterilizing operation according to one embodiment of the present disclosure.
FIG. 10 is a view illustrating a case in which the water purifier rinses out residual sterilizing water during the sterilizing operation according to one embodiment of the present disclosure.
FIG. 11 is a view illustrating a case in which the water purifier controls a filter water passage valve according to one embodiment of the present disclosure.
FIG. 12 is a view illustrating a case in which the water purifier displays progress of a drainage operation through a display device according to one embodiment of the present disclosure.
FIG. 13 is a view for describing a case in which the water purifier operates according to the remaining life of the filter device according to one embodiment of the present disclosure.
FIG. 14 is a view illustrating a case in which the water purifier provides a notification of the remaining life of the filter device according to one embodiment of the present disclosure.
FIG. 15 is a view illustrating a case in which the water purifier provides a notification of a need to replace the filter device according to one embodiment of the present disclosure.
FIG. 16 is a flowchart of a case in which the drainage operation is performed in a method of controlling the water purifier according to one embodiment of the present disclosure.
FIG. 17 is a flowchart of a case in which the sterilizing operation is performed in the method of controlling the water purifier according to one embodiment of the present disclosure.
FIG. 18 is a flowchart of a case in which the filter water passage valve is controlled on the basis of data from an external server in the method of controlling the water purifier according to one embodiment of the present disclosure.
FIG. 19 is a flowchart of a case in which the filter water passage valve is controlled according to the remaining life of the filter device in the method of controlling the water purifier according to one embodiment of the present disclosure.
FIG. 20 is a flowchart of a case in which an operation is performed according to the remaining life of the filter device in the method of controlling the water purifier according to one embodiment of the present disclosure.
FIG. 21 is a flowchart of a case in which discharge of clean water is blocked according to external environment information in the method of controlling the water purifier according to one embodiment of the present disclosure.

### [Modes of the Invention]

Embodiments described herein and configurations illustrated in the drawings are merely exemplary embodiments of the present invention.

Throughout the application, when a certain part is described as being "connected" to another part, both a case in which the certain part is indirectly connected to the other part as well as a case in which the certain part is directly connected to the other part are included therein, and the indirect connection includes a connection via a wireless network.

Terms used herein are for describing the embodiments and are not intended to limit and/or restrict the invention. A singular expression includes a plural expression unless context clearly indicates otherwise. In the application, terms such as "include" or "have" should be understood as designating that features, number, steps, operations, elements, parts, or combinations thereof are present and not as precluding the possibility of the presence or addition of one or more other features, numbers, steps, operations, elements, parts, or combinations thereof in advance.

Terms including ordinals such as first and second may be used herein to describe various elements, but the elements are not limited by the terms. The terms are only used for the purpose of distinguishing one element from another element. For example, a first element may be referred to as a second element while not departing from the scope of the present invention, and likewise, a second element may also be referred to as a first element.

Terms such as "part," "-er/or," "block," "member," and "module" may refer to a unit of processing at least one function or operation. For example, the terms may refer to at least one hardware such as a field programmable gate array (FPGA) and an application-specific integrated circuit (ASIC), at least one software stored in a memory, or at least one process processed by a processor.

A reference numeral assigned to each step is used to identify each step and is not intended to represent an order of the steps. The steps may be performed in a different order from the stated order unless context clearly describes a specific order.

Hereinafter, embodiments will be described in detail with reference to the accompanying drawings.

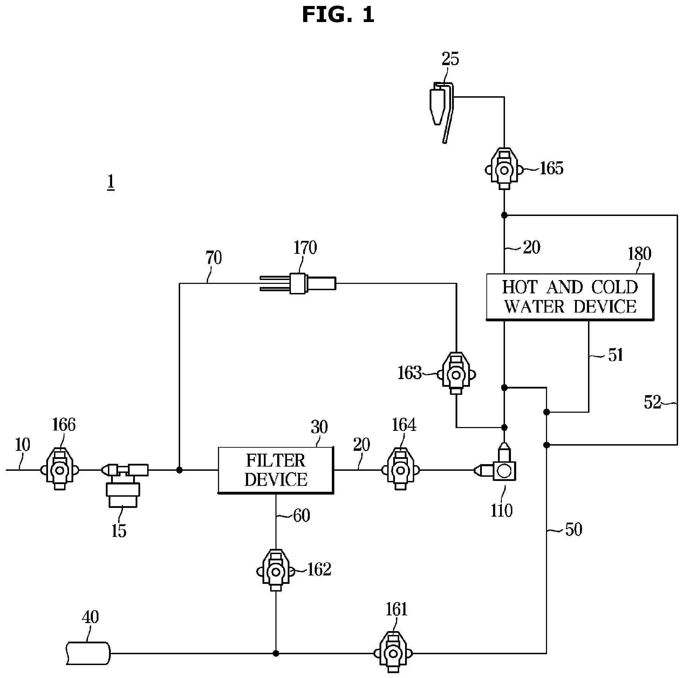

FIG.1 is a view illustrating a water purifier according to one embodiment.

Referring to FIG. 1, a water purifier 1 according to one embodiment includes a raw water flow path 10 into which raw water such as tap water is introduced from the outside, a clean water flow path 20 connected to the raw water flow path 10 and having a water discharge nozzle 25 disposed at an end, a filter device 30 disposed in the clean water flow path 20 to filter the introduced raw water, a drain port 40 through which a liquid in the water purifier 1 is drained to the outside, and a drain flow path 50 branched off from the clean water flow path 20 between the filter device 30 and the water discharge nozzle 25 and connected to a drain port 40. The flow paths disposed in the water purifier 1 may be formed by a plurality of pipes.

The raw water flow path 10 according to one embodiment may be connected to an external water pipe to allow the raw water to be introduced, and a raw water valve 166 configured to control introduction of the raw water and a pressure reducing valve 12 configured to reduce the pressure of the raw water may be disposed in the raw water flow path 10.

Also, according to embodiments, a sediment filter configured to filter sediment included in the raw water or a high-turbidity filter configured to filter relatively large particles may be further disposed in the raw water flow path 10.

The clean water flow path 20 according to one embodiment may be connected to the raw water flow path 10 and receive the raw water from the raw water flow path 10, and a clean water valve 164 configured to control introduction of the raw water from the raw water flow path 10 may be disposed in the clean water flow path 20.

Also, the filter device 30 configured to filter the raw water may be disposed in the clean water flow path 20. The filter device 30 may include a plurality of filters, e.g., a pre-carbon filter which adsorbs volatile substances such as chlorine and chlorine by-products from the raw water, a membrane filter which filters contaminants of very small sizes using a reverse osmotic pressure, and a post-carbon filter which affects a taste of discharged clean water.

Here, as the plurality of filters, the pre-carbon filter, the membrane filter, and the post-carbon filter may be connected in that order, and the raw water introduced into the filter device 30 may be filtered while sequentially passing through the pre-carbon filter, the membrane filter, and the post-carbon filter.

The above description of the types of filters of the filter device 30 is only an example that may be applied to an embodiment of the water purifier 1, and embodiments of the water purifier 1 are not limited to the above example. Therefore, of course, types of filters other than those mentioned above may be provided by as many as the number other than three and in various other arrangements.

Also, the water discharge nozzle 25 may be disposed at the end of the clean water flow path 20, and a water discharge valve 165 configured to control a flow of clean water may be disposed on a front end of the water discharge nozzle 25. That is, in response to the water discharge valve 165 being opened, clean water obtained by filtering in the filter device 30 may be discharged to the outside through the water discharge nozzle 25 disposed on a downstream end portion of the clean water flow path 20.

Meanwhile, in an embodiment of the water purifier 1, upstream and downstream sides and front and rear ends are defined according to directions in which water introduced into the water purifier 1 flows. A side close to a direction in which the raw water is introduced from the outside is the upstream side or the front end, and a side close to a direction in which clean water is discharged or drained to the outside is the downstream side or the rear end.

Also, according to embodiments, a flow rate sensor 110 configured to detect a flow rate in the clean water flow path 20 may be disposed in the clean water flow path 20 and may be disposed between the filter device 30 and the water discharge nozzle 25. In a case in which a liquid flows in the clean water flow path 20 as in a case in which the water discharge valve 165 is opened and clean water is discharged to the outside through the water discharge nozzle 25, the flow rate sensor 110 may output a detected value of the corresponding flow rate.

The drain flow path 50 is connected to a downstream side of the clean water flow path 20. That is, the drain flow path 50 is branched off from the clean water flow path 20 between the filter device 30 and the water discharge nozzle 25 and connected to the drain port 40 to allow the liquid in the clean water flow path 20 to be drained to the outside.

A drain valve 161 configured to open or close the drain flow path 50 and control the flow of the clean water and a check valve (not illustrated) configured to prevent a backflow of the clean water may be disposed in the drain flow path 50.

Since the drain flow path 50 is branched off from the clean water flow path 20, in response to the drain valve 161 being opened, the clean water flowing in the clean water flow path 20 may be introduced into the drain flow path 50 and be discharged to the outside through the drain port 40 of the water purifier 1 that is connected to an end portion of the drain flow path 50.

Meanwhile, the water purifier 1 according to one embodiment may further include a hot and cold water device 180 configured to provide hot water or cold water, and the hot and cold water device 180 may include a heat exchanger. The hot and cold water device 180 may be disposed downstream of the clean water flow path 20. That is, the hot and cold water device 180 may be disposed in the clean water flow path 20 between the filter device 30 and the water discharge nozzle 25.

In a case in which the water purifier 1 includes the hot and cold water device 180 according to embodiments, the water purifier 1 may further include a first transfer flow path 51 which includes one end connected to the hot and cold water device 180 and the other end connected to the drain flow path 50 and which is configured to transfer the clean water discharged from the hot and cold water device 180 to the drain flow path 50 and a second transfer flow path 52 which is branched off from the clean water flow path 20 between the hot and cold water device 180 and the water discharge nozzle 25 and connected to the drain flow path 50 to transfer the clean water in the clean water flow path 20 to the drain flow path 50.

Also, according to embodiments, the water purifier 1 may further include a filter water passage flow path 60 which includes one end connected to the filter device 30 and the other end connected to the drain port 40 and through which raw water including impurities from the filter device 30 is drained.

Specifically, the filter water passage flow path 60 may be connected to a filter housing of the membrane filter of the filter device 30 and allows raw water cleaning the inside of the membrane filter to be drained to the drain port 40 by passing through the inside of the membrane filter.

Here, a filter water passage valve 162 configured to open or close the filter water passage flow path 60 to control the flow of the raw water passing through the membrane filter may be disposed in the filter water passage flow path 60.

Also, according to embodiments, the water purifier 1 may further include a sterilizing water flow path 70 which includes one end connected to the raw water flow path 10 for the raw water to bypass the filter device 30 and the other end connected to the clean water flow path 20 between the filter device 30 and the water discharge nozzle 25 and which is configured to treat the raw water and form sterilizing water.

In this case, at least one of the clean water flow path 20 and the sterilizing water flow path 70 may be branched off from the raw water flow path 10. For example, the clean water flow path 20 may be integrally connected to the raw water flow path 10, and the sterilizing water flow path 70 may be formed to bypass from the raw water flow path 10.

In the sterilizing water flow path 70, a sterilizing water valve 163 configured to control introduction of the raw water from the raw water flow path 10 may be disposed, and a sterilizing water formation device 170 configured form the sterilizing water may be disposed.

For example, the sterilizing water formation device 170 may be implemented as an electrolytic device which electrolyzes water to form a sterilizing substance.

The sterilizing water formation device 170 which is implemented as an electrolytic device may include a plurality of plate-type electrodes. In response to the supply of current to the plurality of plate-type electrodes, chlorine included in water flowing between the plurality of plate-type electrodes may be electrolyzed, and a sterilizing substance having sterilizing power may be formed. For example, hypochlorous acid, which is a sterilizing substance, may be formed.

However, the sterilizing water formation device 170 is not limited to the above example, and any other known type of device that can form sterilizing water may be applied. For example, the sterilizing water formation device 170 may be provided as an ultraviolet (UV) lamp, a light emitting diode (LED) lamp, or the like.

The sterilizing water flow path 70 may be re-connected to the clean water flow path 20 at a rear end of the filter device 30 that is disposed in the clean water flow path 20. That is, the sterilizing water flow path 70 may be re-connected to the clean water flow path 20 between the filter device 30 and the water discharge nozzle 25.

According to embodiments, the water purifier 1 may include a main body (not illustrated). In this case, the water discharge nozzle 25 may be disposed outside the main body, and the filter device 30, the flow paths, and the valves may be disposed inside the main body.

Also, according to embodiments, the water purifier 1 may be disposed on a lower portion of a sink in a kitchen, and the water discharge nozzle 25 may be disposed on an upper portion of the sink.

The arrangement of elements such as pipes and valves disposed inside the water purifier 1 has been described in detail above. Hereinafter, a home appliance 2 including the water purifier 1 will be described.

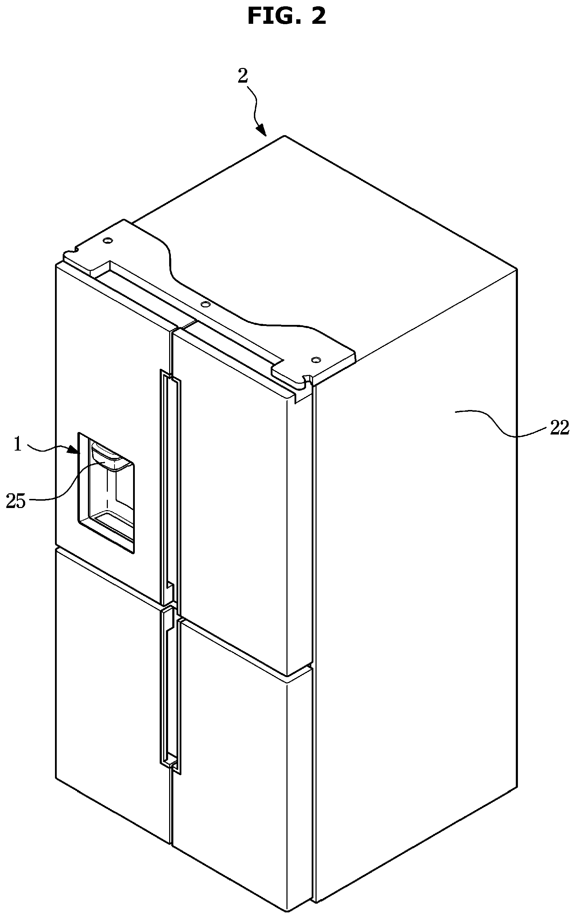

FIG. 2 is a view illustrating the home appliance 2 according to one embodiment.

Referring to FIG. 2, the home appliance 2 according to one embodiment may include a main body 22 and may include the water purifier 1 which includes the water discharge nozzle 25 disposed outside the main body 22.

For example, as illustrated in FIG. 2, the home appliance 2 may correspond to a refrigerator. However, the type of the home appliance 2 is not limited to the above example and may, without limitations, include other types of home appliances, such as a carbonated water maker or a beer maker, as long as the home appliances perform an operation other than water purification.

Each of the filter device 30, the flow paths 10, 20, 50, 60, and 70, the valves 12, 161, 162, 163, 164, and 165, the sterilizing water formation device 170, and the hot and cold water device 180 of the water purifier 1 may be disposed inside the main body 22 of the home appliance 2, and a display device 190 may be disposed on an outer surface of the main body 22 of the home appliance 2.

According to embodiments, the water purifier 1 described below may be provided as a separate device that only performs a water purification function or may be disposed in the home appliance 2 which performs a function other than the water purification function.

Hereinafter, functions of elements of the water purifier 1 will be described in detail.

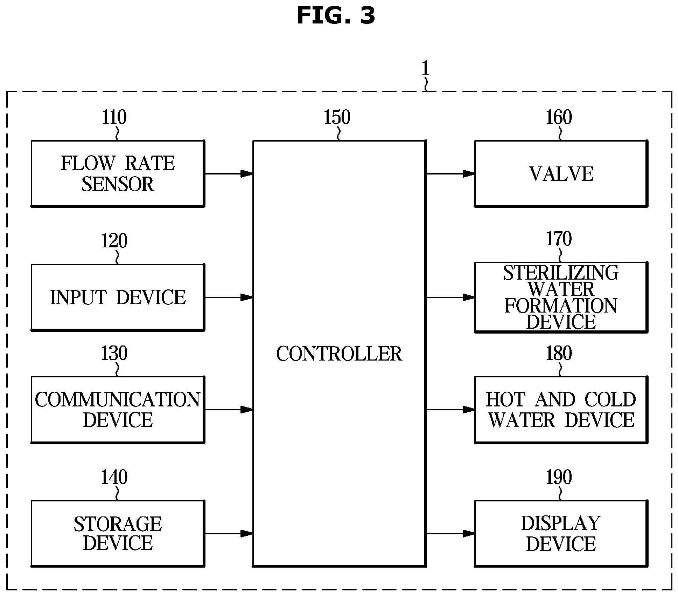

FIG. 3 is a control block diagram of the water purifier 1 according to one embodiment.

Referring to FIG. 3, the water purifier 1 according to one embodiment includes the flow rate sensor 110 configured to detect a flow rate in the clean water flow path 20, an input device 120 configured to receive an input from a user, a communication device 130 configured to perform communication with an external electronic device, a storage device 140 configured to store various pieces of information necessary for control of the water purifier 1, a controller 150 configured to automatically perform a cleaning operation on the basis of the remaining life of the filter device 30, a valve 160 configured to control a flow of raw water, clean water, or sterilizing water inside the water purifier 1, the sterilizing water formation device 170 configured to form sterilizing water, the hot and cold water device 180 configured to form hot water or cold water through a heat exchange with the clean water, and the display device 190 configured to display information on the cleaning operation.

The flow rate sensor 110 according to one embodiment may be disposed between the filter device 30 and the water discharge nozzle 25 and detect the flow rate in the clean water flow path 20.

In a case in which a liquid flows in the clean water flow path 20 as in a case in which the water discharge valve 165 is opened and clean water is discharged to the outside through the water discharge nozzle 25, the flow rate sensor 110 may output a detected value of the corresponding flow rate.

The input device 120 according to one embodiment may receive an input for water discharge from a user. To this end, the input device 120 may be disposed outside the water purifier 1 and may be implemented as a button, a touchpad, a lever, or the like.

The communication device 130 according to one embodiment may transmit and receive data to and from an external electronic device. For example, the communication device 130 according to one embodiment may receive external environment information, such as information on the quality of raw water or information on an installation environment of the water purifier 1, from an external electronic device.

To this end, the communication device 130 may perform wired communication or wireless communication with an external electronic device, and a known type of wired communication or wireless communication may be applied.

The storage device 140 according to one embodiment may be implemented as a known type of storage medium to store various pieces of information necessary for control of the water purifier 1.

For example, the storage device 140 may store information on the correlation between the remaining life of the filter device 30 and a drainage reference time which is a reference for drainage of stagnant water, information on the correlation between the remaining life of the filter device 30 and a sterilizing operation cycle, information on the life of the filter device 30, information on a point in time at which the filter device 30 has been replaced, and the like.

The controller 150 according to one embodiment may determine the remaining life of the filter device 30 on the basis of a point in time at which the filter device 30 has been replaced. Here, the point in time at which the filter device 30 has been replaced may be automatically updated at the time of replacing a filter of the filter device 30 and stored in the storage device 140 or may be input by a user through the input device 120 and stored in the storage device 140.

According to embodiments, the controller 150 may determine a ratio (%) between a value obtained by subtracting, from the entire life of the filter device 30, an amount of time elapsed from a point in time at which the filter device 30 has been replaced and the entire life of the filter device 30 as the remaining life of the filter device 30.

Also, according to embodiments, the controller 150 may determine a clean water amount L which is obtained by subtracting, from an amount of available clean water in the filter device 30, an amount of clean water that corresponds to an amount of time elapsed from a point in time at which the filter device 30 has been replaced as the remaining life of the filter device 30, or may determine a ratio (%) between a clean water amount obtained by subtracting, from an amount of available clean water in the filter device 30, an amount of clean water that corresponds to an amount of time elapsed from a point in time at which the filter device 30 has been replaced and the amount of available clean water in the filter device 30 as the remaining life of the filter device 30. Here, the controller 150 may use a predetermined amount of clean water per hour to determine the amount of clean water that corresponds to the amount of time elapsed from the point in time at which the filter device 30 has been replaced, or may, on the basis of an output of the flow rate sensor 110, determine the amount of clean water that corresponds to the amount of time elapsed from the point in time at which the filter device 30 has been replaced.

The controller 150 is configured to control the drain valve 161 to perform the cleaning operation on the basis of the remaining life of the filter device 30.

According to embodiments, in a case in which the controller 150 receives information on an occurrence of contamination in the raw water as the external environment information through the communication device 130, the controller 150 may control the filter water passage valve 162 to open the filter water passage flow path 60 or may, according to embodiments, perform a sterilizing operation or adjust a cycle for repeating the sterilizing operation to decrease.

Also, in a case in which the controller 150 receives information on an installation environment indicating an uncontaminated area, in which the possibility of an occurrence of contamination in the raw water is low, as the external environment information through the communication device 130, the controller 150 may control the filter water passage valve 162 to close the filter water passage flow path 60. A configuration of performing the cleaning operation using the external environment information will be described again in detail below.

According to embodiments, the controller 150 may, on the basis of the remaining life of the filter device 30, control the drain valve 161 to perform a stagnant water discharge operation in which stagnant water is discharged or control the drain valve 161 to perform a sterilizing operation in which the flow paths of the water purifier 1 are sterilized using sterilizing water.

In a case in which there is no user input through the input device 120 and thus water is not discharged through the water discharge nozzle 25, a flow rate in the clean water flow path 20 that is calculated through the flow rate sensor 110 may be negligible or less than or equal to a predetermined value. In this case, stagnant water which is not able to be discharged may be formed in the flow paths inside the water purifier 1, and contamination due to the accumulation of foreign matter, the growth of microorganisms, and the like may be accelerated with an increase in the stagnation time of the stagnant water in the water purifier 1.

Here, the accumulation of foreign matter or the growth of microorganisms in the water purifier 1 may vary according to a point in time at which the filter device 30 has been replaced. That is, at the point in time at which the filter device 30 has been replaced, foreign matter or microorganisms may hardly be present in the filter device 30, and thus the degree of contamination of the stagnant water may be low. On the other hand, after the filter device 30 is replaced, foreign matter or microorganisms may be accumulated in the filter device 30 as time passes, and thus the degree of contamination of the stagnant water may be high.

Therefore, according to embodiments, in response to the flow rate in the clean water flow path 20 being less than or equal to a predetermined value during a drainage reference time, the controller 150 may control the drain valve 161 to perform the stagnant water discharge operation in which the stagnant water is discharged.

Here, the controller 150 may determine the drainage reference time to be proportional to the remaining life of the filter device 30. That is, the drainage reference time may shorten with a decrease in the remaining life of the filter device 30. In other words, as time passes after the filter device 30 is replaced, the drainage reference time may shorten, and accordingly, the possibility that the stagnant water discharge operation is performed may increase.

That is, the controller 150 may adjust the drainage reference time to decrease with a decrease in the remaining life of the filter device 30. Here, according to embodiments, the controller 150 may adjust the drainage reference time to decrease in stages according to the remaining life of the filter device 30. This will be described again in detail below.

Also, according to embodiments, in a case of performing the stagnant water discharge operation, the controller 150 may, change, in stages, a flow path through which the stagnant water is discharged.

Specifically, in a case in which a water discharge command is not input through the input device 120 during the drainage reference time and thus the flow rate in the clean water flow path 20 is less than or equal to a predetermined value, the controller 150 may control the drain valve 161 and the filter water passage valve 162 to drain the stagnant water in the clean water flow path 20 to the filter water passage flow path 60 for a predetermined amount of time and may control the drain valve 161 and the filter water passage valve 162 to drain the stagnant water in the clean water flow path 20 to the drain flow path 50 after the predetermined amount of time.

In this way, in the case of discharging the stagnant water, the water purifier 1 may change, in stages, a flow path through which the stagnant water is drained and thus prevent contamination at a front end of the membrane filter from spreading in a chain to the membrane filter and the post-carbon filter.

That is, the water purifier 1 may primarily discharge impurities at the front end of the membrane filter through the filter water passage flow path 60 connected to the membrane filter and then may secondarily discharge the stagnant water that has passed through the entire filter device 30 including the post-carbon filter.

Immediately after the filter device 30 is replaced, the accumulation of foreign matter or the growth of microorganisms is not enough to require sterilization, and thus the effect of sterilization is insignificant. In this case, considering that the life of the sterilizing water formation device 170 is limited, performing sterilization may be seen as repeating an unnecessary operation.

On the other hand, at a point in time at which the filter device 30 needs to be replaced due to an elapse of a large amount of time after the filter device 30 has been replaced, since the amount of foreign matter is large and an environment favorable for the growth of microorganisms is created, more frequent sterilization may be necessary.

Therefore, according to embodiments, the controller 150 may perform a sterilizing operation in which sterilizing water is formed in consideration of the remaining life of the filter device 30 and caused to pass through the flow paths inside the water purifier 1. That is, the controller 150 may control the sterilizing water formation device 170, the sterilizing water valve 163, the clean water valve 164, and the drain valve 161 to perform the sterilizing operation in which the sterilizing water is formed in consideration of the remaining life of the filter device 30 and passes through the clean water flow path 20 and the drain flow path 50.

Specifically, the controller 150 may determine a cycle for repeating the sterilizing operation to be proportional to the remaining life of the filter device 30. That is, the cycle of repetition of the sterilizing operation may shorten with a decrease in the remaining life of the filter device 30. In other words, the cycle of repetition of the sterilizing operation may shorten as more time passes after the filter device 30 is replaced, and accordingly, the sterilizing operation may be repeated in a shorter cycle with a decrease in the remaining life of the filter device 30.

Here, according to embodiments, the controller 150 may adjust the determined cycle of repetition of the sterilizing operation on the basis of information on the quality of raw water that is received through the communication device 130.

That is, the controller 150 may adjust the cycle of repetition of the sterilizing operation to shorten with a decrease in the water quality indicated by the information on the quality of raw water (e.g., nephelometric turbidity unit (NTU)).

In a case in which a cleaning operation such as the stagnant water discharge operation or the sterilizing operation is performed, the controller 150 according to one embodiment may control the display device 190 to display information on the cleaning operation.

Here, the information on the cleaning operation may include information related to the cleaning operation, such as whether the cleaning operation is performed, progress of the cleaning operation, and history of performing the cleaning operation.

Also, the controller 150 may control the communication device 130 to transmit the information on the cleaning operation to an external electronic device, and in this case, the external electronic device may display the information on the cleaning operation through a display.

The controller 150 may include a program for performing the operations described above or operations to be described below, at least one memory configured to store various data necessary for running the program, and at least one processor configured to run a stored program.

The valve 160 according to one embodiment may, by being opened or closed according to control by the controller 150, control a flow of raw water, clean water, or sterilizing water in a flow path in which the valve 160 is disposed.

According to embodiments, the valve 160 may include the raw water valve 166 disposed in the raw water flow path 10, the drain valve 161 disposed in the drain flow path 50, the filter water passage valve 162 disposed in the filter water passage flow path 60, the sterilizing water valve 163 disposed in the sterilizing water flow path 70, the clean water valve 164 disposed in the clean water flow path 20, and the water discharge valve 165 disposed on the front end of the water discharge nozzle 25. The control of the valve 160 will be described again in detail below.

The sterilizing water formation device 170 according to one embodiment may be disposed in the sterilizing water flow path 70 and treat introduced raw water to form sterilizing water.

According to embodiments, the sterilizing water formation device 170 may be implemented as an electrolytic device which electrolyzes raw water to form a sterilizing substance. According to embodiments, the sterilizing water formation device 170 may be provided as a UV lamp, an LED lamp, or the like.

The hot and cold water device 180 according to one embodiment may include a heat exchanger and be disposed downstream of the clean water flow path 20 and may provide hot water or cold water through a heat exchange with clean water on the basis of a user input through the input device 120.

That is, the hot and cold water device 180 may be disposed in the clean water flow path 20 between the filter device 30 and the water discharge nozzle 25 and receive clean water from the filter device 30 and may convert the clean water to hot water or cold water through the heat exchange and transfer the hot water or cold water to the water discharge nozzle 25.

The display device 190 according to one embodiment may display information on a cleaning operation such as the stagnant water discharge operation or the sterilizing operation. To this end, according to embodiments, the display device 190 may include a known type of display panel or include an LED lamp.

Corresponding to performance of the elements of the water purifier 1 illustrated in FIG. 3, at least one element may be added or omitted. Also, it should be easily understood by those of ordinary skill in the art that positions of the elements may be changed according to the performance or structure of the system.

The elements of the water purifier 1 have been described in detail above. Hereinafter, the water purifier 1 performing a cleaning operation will be described in detail.

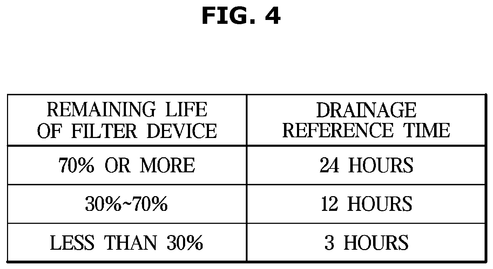

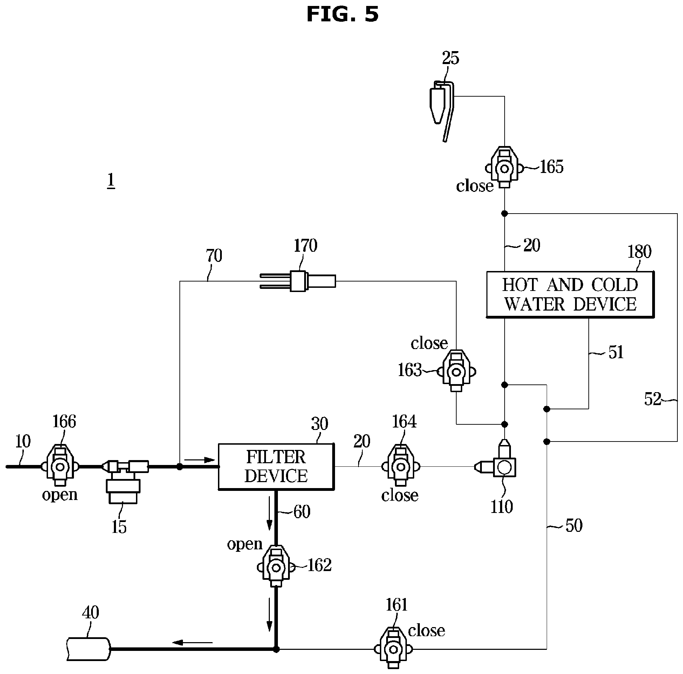

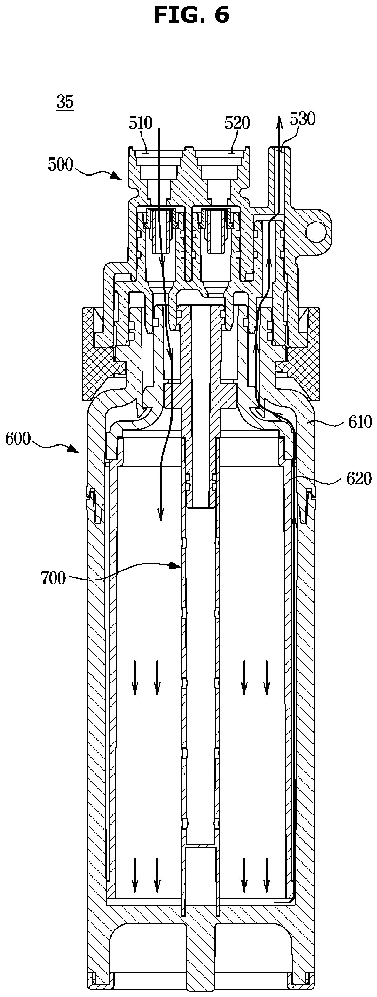

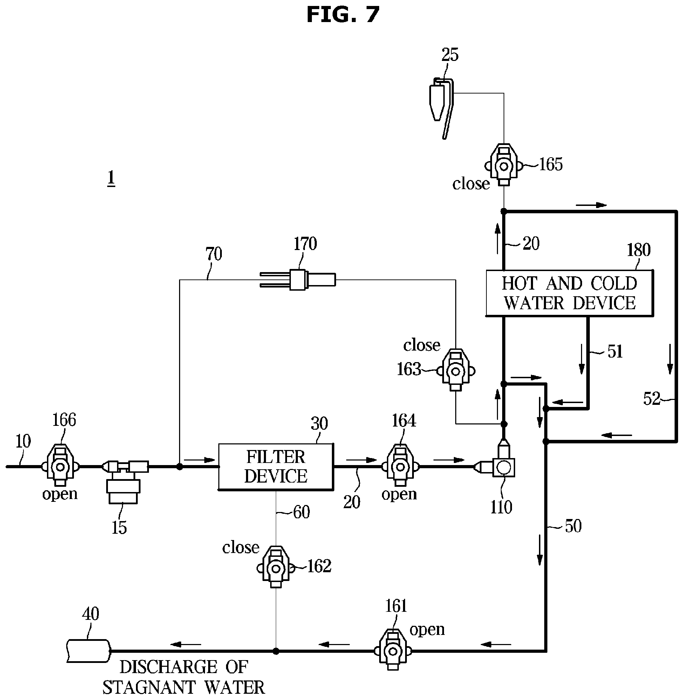

FIG. 4 is a view illustrating the correlation between the remaining life of the filter device 30 and the drainage reference time according to one embodiment, FIG. 5 is a view illustrating a case in which the water purifier 1 discharges stagnant water through the filter water passage flow path according to one embodiment, FIG. 6 is a view illustrating the membrane filter of the filter device 30 according to one embodiment, and FIG. 7 is a view illustrating a case in which the water purifier 1 discharges stagnant water through the drain flow path according to one embodiment.

In a case in which there is no user input and thus clean water is not discharged through the water discharge nozzle 25, a flow rate in the clean water flow path 20 that is calculated through the flow rate sensor 110 may be negligible or less than or equal to a predetermined value. In this case, stagnant water which is not able to be discharged may be formed in the flow paths inside the water purifier 1, and contamination due to the accumulation of foreign matter, the growth of microorganisms, and the like may be accelerated with an increase in the stagnation time of the stagnant water in the water purifier 1.

Here, the accumulation of foreign matter or the growth of microorganisms in the water purifier 1 may vary according to a point in time at which the filter device 30 has been replaced. That is, at the point in time at which the filter device 30 has been replaced, foreign matter or microorganisms may hardly be present in the filter device 30, and thus the degree of contamination of the stagnant water may be low. On the other hand, after the filter device 30 is replaced, foreign matter or microorganisms may be accumulated in the filter device 30 as time passes, and thus the degree of contamination of the stagnant water may be high.

Therefore, according to embodiments, the controller 150 may adjust a cycle of performing the stagnant water discharge operation on the basis of the remaining life of the filter device 30.

Specifically, according to embodiments, in response to the flow rate in the clean water flow path 20 being less than or equal to a predetermined value during a drainage reference time, the controller 150 may determine that stagnant water is formed due to the absence of a user input for water discharge during the drainage reference time and may control the drain valve 161 to perform the stagnant water discharge operation for discharging the stagnant water.

Here, the controller 150 may determine the drainage reference time to be proportional to the remaining life of the filter device 30. That is, the controller 150 may adjust the drainage reference time to decrease with a decrease in the remaining life of the filter device 30.

For example, on the basis of the information on the correlation between the remaining life of the filter device 30 and the drainage reference time that is illustrated in FIG. 4, the controller 150 may determine the drainage reference time as 24 hours in a case in which the remaining life of the filter device 30 is 70% or more, may determine the drainage reference time as 12 hours in a case in which the remaining life of the filter device 30 is 30% or more and less than 70%, and may determine the drainage reference time as 3 hours in a case in which the remaining life of the filter device 30 is less than 30%. In this way, according to embodiments, the controller 150 may adjust the drainage reference time to decrease in stages according to the remaining life of the filter device 30.

That is, the drainage reference time may shorten with a decrease in the remaining life of the filter device 30. In other words, the drainage reference time may shorten as more time passes after the filter device 30 is replaced, and accordingly, the possibility that the stagnant water discharge operation is performed may increase.

As described above, the degree of contamination of the stagnant water may vary according to a period of use of the filter device 30. Therefore, taking into consideration that the degree of contamination of the stagnant water increases as more time passes from a point in time at which the filter device 30 has been replaced, the water purifier 1 may determine the drainage reference time to shorten to discharge the stagnant water more frequently with a decrease in the remaining life of the filter device 30.

Here, according to embodiments, in a case of performing the stagnant water discharge operation, the controller 150 may change, in stages, a flow path through which the stagnant water is discharged.

Specifically, in a case in which a water discharge command is not input through the input device 120 during the drainage reference time and thus the flow rate in the clean water flow path 20 is less than or equal to a predetermined value, the controller 150 may control the drain valve 161 and the filter water passage valve 162 to drain the stagnant water in the clean water flow path 20 to the filter water passage flow path 60 for a predetermined amount of time and may control the drain valve 161 and the filter water passage valve 162 to drain the stagnant water in the clean water flow path 20 to the drain flow path 50 after the predetermined amount of time.

As illustrated in FIG. 5, the controller 150 may open the raw water valve 166 and the filter water passage valve 162 to drain the stagnant water to the filter water passage flow path 60 and may close the drain valve 161, the sterilizing water valve 163, and the clean water valve 164. In this case, the stagnant water stagnating in the raw water flow path 10 and the clean water flow path 20 may be discharged through the drain port 40 on the basis of the pressure of the raw water.

Here, the stagnant water discharged to the filter water passage flow path 60 may pass through the membrane filter of the filter device 30 and thus remove impurities from the membrane filter.

Specifically, as illustrated in FIG. 6, a membrane filter 35 of the filter device 30 includes a filter cap 500 and a filter housing 600.

Here, the filter cap 500 may have the shape of a cap which is formed at one side of the membrane filter 35 and has an inner space formed therein, may include through-holes for connection to each of the flow paths, and may include a raw water inlet 510, a clean water outlet 520, and a drain outlet 530 as the through-holes.

The raw water inlet 510 may be provided to be connected to the clean water flow path 20 at the raw water flow path 10 side and allow introduction of raw water, and the clean water outlet 520 may be provided to be connected to the clean water flow path 20 at the water discharge nozzle 25 side and allow discharge of clean water obtained by filtering in the filter device. The drain outlet 530 may be provided to be connected to the filter water passage flow path 60 and, during the discharge of stagnant water, discharge stagnant water including contaminants to the outside.

Also, the filter housing 600 includes an outer housing 610 and an inner housing 620, and the outer housing 610 forms an exterior of the membrane filter 35.

The inner housing 620 may be formed to be spaced apart from the outer housing 610, may have an accommodation space formed therein, and may include a filter body 700 disposed in the accommodation space to filter raw water.

As the stagnant water discharge operation is performed, in a case in which the filter water passage valve 162 is opened, raw water may be introduced through the raw water inlet 510 of the membrane filter 35 and remove impurities on an outer surface of the filter body 700.

The water including impurities of the filter body 700 may flow from the accommodation space of the inner housing 620 to an opening below the inner housing 620, and the stagnant water that has passed through the opening may flow upward again along a separation space between the inner housing 620 and the outer housing 610. In this way, the stagnant water may be discharged to the outside of the membrane filter 35 through the drain outlet 530, may flow to the filter water passage flow path 60 connected to the drain outlet 530, and may be discharged to the outside through the drain port 40.

In this way, in the case of performing the stagnant water discharge operation, the controller 150 may open the filter water passage valve 162 for a predetermined amount of time to allow the stagnant water to pass through the membrane filter 35, remove impurities, and be transferred to the drain port 40 through the filter water passage flow path 60.

Then, as illustrated in FIG. 7, the controller 150 closes the filter water passage valve 162 and opens the raw water valve 166, the drain valve 161, and the clean water valve 164 to allow the stagnant water in the clean water flow path 20 to flow to the drain flow path 50 and be discharged. Here, the controller 150 may close the water discharge valve 165 and may, according to embodiments, also close the sterilizing water valve 163.

According to embodiments, in a case in which the water purifier 1 further includes the hot and cold water device 180, the stagnant water that has passed through the hot and cold water device 180 may flow to the drain flow path 50 through the first transfer flow path 51 and the second transfer flow path 52.

In this way, in the case of discharging the stagnant water, the water purifier 1 may change, in stages, a flow path through which the stagnant water is drained and thus prevent contamination at a front end of the membrane filter 35 from spreading in a chain to the membrane filter 35 and the post-carbon filter.

That is, the water purifier 1 may primarily discharge impurities at the front end of the membrane filter 35 through the filter water passage flow path 60 connected to the membrane filter 35 and then may secondarily discharge the stagnant water that has passed through the entire filter device 30 including the post-carbon filter.

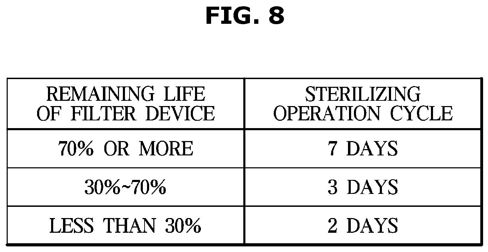

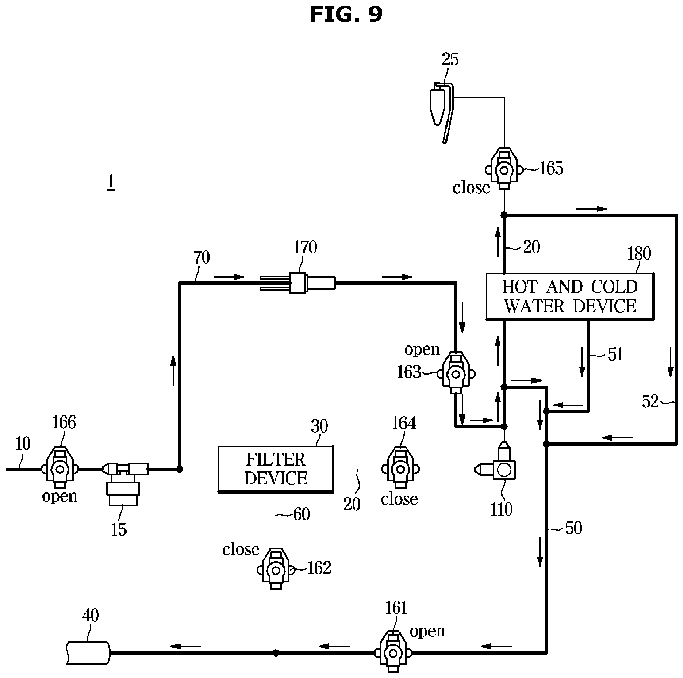

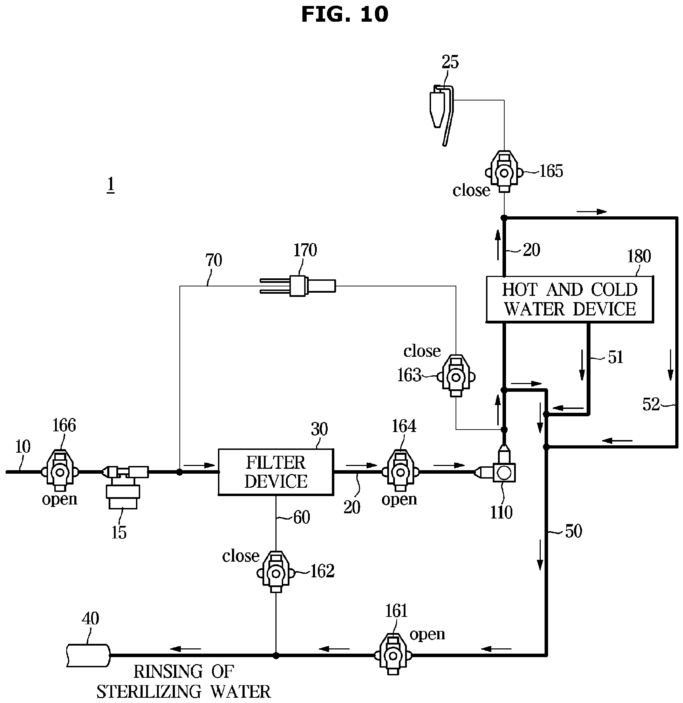

FIG. 8 is a view illustrating the correlation between the remaining life of the filter device 30 and a sterilizing operation cycle according to one embodiment, FIG. 9 is a view illustrating a case in which the water purifier 1 forms sterilizing water during the sterilizing operation according to one embodiment, and FIG. 10 is a view illustrating a case in which the water purifier 1 rinses out residual sterilizing water during the sterilizing operation according to one embodiment.

Immediately after the filter device 30 is replaced, the accumulation of foreign matter or the growth of microorganisms is not enough to require sterilization, and thus the effect of sterilization is insignificant. In this case, considering that the life of the sterilizing water formation device 170 is limited, performing sterilization may be seen as repeating an unnecessary operation.

On the other hand, at a point in time at which the filter device 30 needs to be replaced due to an elapse of a large amount of time after the filter device 30 is replaced, since the amount of foreign matter is large and an environment favorable for the growth of microorganisms is created, more frequent sterilization may be necessary.

Accordingly, according to embodiments, the controller 150 may determine a cycle for repeating the sterilizing operation on the basis of the remaining life of the filter device 30. Specifically, the controller 150 may determine the cycle of repetition of the sterilizing operation to be proportional to the remaining life of the filter device 30.

For example, on the basis of the information on the correlation between the remaining life of the filter device 30 and the sterilizing operation cycle that is illustrated in FIG. 8, the controller 150 may determine the sterilizing operation cycle as 7 days in a case in which the remaining life of the filter device 30 is 70% or more, may determine the sterilizing operation cycle as 3 days in a case in which the remaining life of the filter device 30 is 30% or more and less than 70%, and may determine the sterilizing operation cycle as 2 days in a case in which the remaining life of the filter device 30 is less than 30%.

That is, the cycle of repetition of the sterilizing operation may shorten with a decrease in the remaining life of the filter device 30. In other words, the cycle of repetition of the sterilizing operation may shorten as more time passes after the filter device 30 is replaced, and accordingly, the sterilizing operation may be repeated in a shorter cycle with a decrease in the remaining life of the filter device 30.

In this way, the controller 150 may control the sterilizing water formation device 170, the sterilizing water valve 163, the clean water valve 164, and the drain valve 161 to perform the sterilizing operation in which the sterilizing water is formed in consideration of the remaining life of the filter device 30 and passes through the clean water flow path 20 and the drain flow path 50.

Here, the sterilizing operation may be divided into a first sterilizing operation in which the sterilizing water is formed and a second sterilizing operation in which the residual sterilizing water is rinsed out.

Specifically, as illustrated in FIG. 9, the controller 150 may open the raw water valve 166, the sterilizing water valve 163, and the drain valve 161 and turn on the sterilizing water formation device 170 so that raw water bypasses the filter device 30 and passes through the sterilizing water flow path 70 and thus sterilizing water is formed. Here, the controller 150 may close the clean water valve 164.

The formed sterilizing water may sterilize the clean water flow path 20 and the drain flow path 50, and according to embodiments, the controller 150 may, after the sterilizing water is formed, close the drain valve 161 for a predetermined amount of time to allow the formed sterilizing water to stay in the flow paths 20 and 50 for the predetermined amount of time and then open the drain valve 161 again.

Then, as illustrated in FIG. 10, the controller 150 may close the sterilizing water valve 163 and open the raw water valve 166, the clean water valve 164, and the drain valve 161 to rinse out the sterilizing water remaining in the flow paths 10 and 20 using raw water or clean water and to allow clean water including the sterilizing water to be discharged through the drain port 40.

As described above, the controller 150 may perform the sterilizing operation on the basis of a repetition cycle thereof which is determined on the basis of the remaining life of the filter device 30.

That is, in a case in which an amount of time that corresponds to the determined repetition cycle passes after the sterilizing operation is performed, the controller 150 may automatically re-perform the sterilizing operation.

However, according to embodiments, the controller 150 may further consider whether the flow rate in the clean water flow path 20 has decreased, in addition to considering the repetition cycle determined on the basis of the remaining life of the filter device 30, to determine whether to perform the sterilizing operation.

Specifically, in response to the flow rate in the clean water flow path 20 being lower than or equal to a reference flow rate during drainage of water through the water discharge nozzle 25 after an elapse of the time corresponding to the determined repetition cycle after the sterilizing operation is performed, the controller 150 may re-perform the sterilizing operation.

That is, in a case in which a new repetition cycle comes after the sterilizing operation is performed, the controller 150 may determine whether the flow rate in the clean water flow path 20 at the time the clean water is drained through the water discharge nozzle 25 is lower than or equal to a reference flow rate and may re-perform the sterilizing operation in response to the flow rate in the clean water flow path 20 becoming lower than or equal to the reference flow rate.

In this way, according to embodiments, the controller 150 may perform the sterilizing operation in a case in which the flow rate of the clean water in the clean water flow path 20 decreases due to the accumulation of foreign matter in the filter device 30 and the flow paths 10 and 20 and thus may ensure the flow rate of the clean water through foreign matter removal.

Also, according to embodiments, in a case in which the controller 150 receives information on an occurrence of contamination in the raw water as the external environment information through the communication device 130, the controller 150 may perform the sterilizing operation or adjust the cycle for repeating the sterilizing operation to decrease.

In this way, even in a case in which biological contamination such as green algae formation occurs in the raw water, the water purifier 1 may provide the sterilizing operation immediately or repeat the sterilizing operation in a short cycle, thus keeping the inside of the water purifier 1 clean.

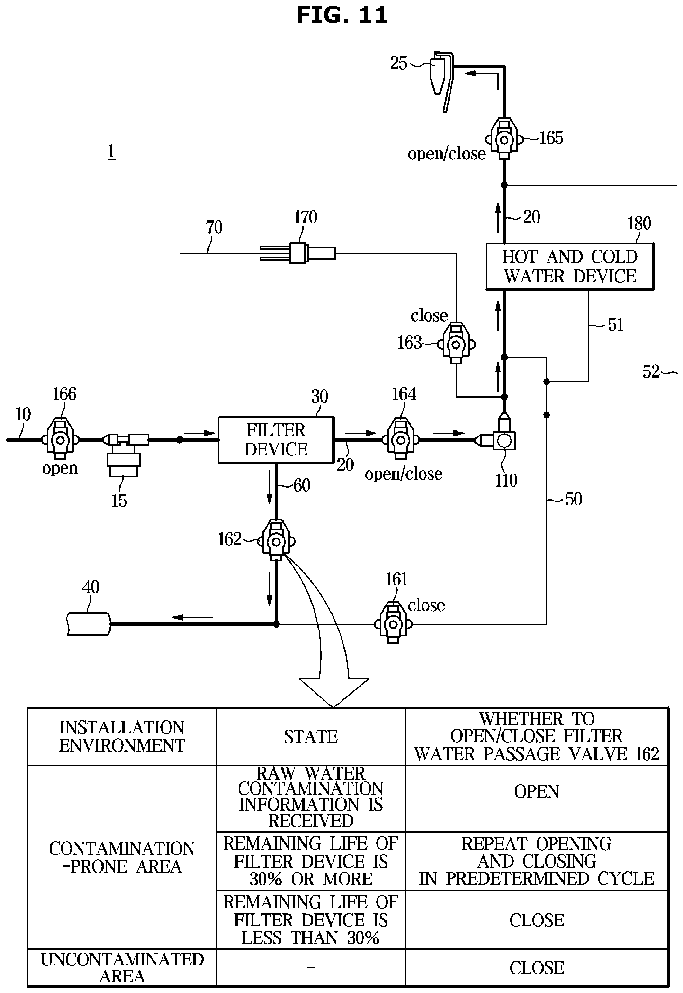

FIG. 11 is a view illustrating a case in which the water purifier 1 controls the filter water passage valve 162 according to one embodiment.

Referring to FIG. 11, in a case in which the controller 150 according to one embodiment receives information on an occurrence of contamination in the raw water from an external server (not illustrated) through the communication device 130, the controller 150 may control the filter water passage valve 162 to open the filter water passage flow path 60.

Specifically, in a case in which the controller 150 receives information on an occurrence of contamination in the raw water (e.g., an occurrence of rust in tap water, an occurrence of green algae in a water supply source, introduction of contaminants into tap water, etc.), from an external server managing raw water such as tap water (e.g., a water resources corporation server), the controller 150 may open the filter water passage valve 162 to allow the raw water to pass through the filter water passage flow path 60.

In this way, in response to receiving information on contamination in the raw water, the water purifier 1 may open the filter water passage valve 162 so that impurities accumulated in the membrane filter 35 of the filter device 30 are removed by the raw water, and in this way, the water purifier 1 can prevent a flow rate decrease and water purification performance drop which may occur due to the filter device 30 being blocked.

Also, the controller 150 according to one embodiment may control the filter water passage valve 162 to repeat opening and closing in a predetermined cycle. That is, according to embodiments, the controller 150 may repeat opening and closing of the filter water passage valve 162 in a predetermined cycle to periodically remove impurities accumulated in the membrane filter 35 of the filter device 30. In this way, since the impurities in the membrane filter 35 may be periodically removed, the life of the filter device 30 can be extended.

However, in a situation in which the flow rate of clean water which passes through the filter device 30 and is transferred to the water discharge nozzle 25 decreases according to the life of the filter device 30, the controller 150 may, in response to the remaining life of the filter device 30 being less than a predetermined value (e.g., 30%), stop controlling the filter water passage valve 162 in the predetermined cycle and close the filter water passage valve 162 in order to prevent a further decrease in the flow rate due to the filter water passage valve 162 being opened. In this way, the water purifier 1 may ensure the flow rate of the clean water even in a situation in which the remaining life of the filter device 30 is shortened.

Also, according to embodiments, the water purifier 1 may control the filter water passage valve 162 in consideration of an installation environment of the water purifier 1. That is, the controller 150 may control the filter water passage valve 162 on the basis of information on the installation environment of the water purifier 1 that is input by a user through the input device 120 or received through the communication device 130. Here, the installation environment may correspond to an environment of an area around the position at which the water purifier 1 is installed.

Specifically, in a case in which the installation environment of the water purifier 1 corresponds to a contamination-prone area where contamination of raw water may occur, such as a densely populated area such as a large city or an area of concern for pollution such as an industrial district, as described above, the controller 150 may control the filter water passage valve 162 in response to receiving information on an occurrence of contamination or may open or close the filter water passage valve 162 according to the life of the filter device 30.

Also, in a case in which the installation environment of the water purifier 1 corresponds to an uncontaminated area in which the possibility of contamination of raw water is low, such as a mountainous area, the controller 150 may close the filter water passage valve 162 from the beginning.

In this way, by utilizing the filter water passage flow path 60 adaptively according to the installation environment, the water purifier 1 can effectively prevent contamination of the water purifier 1.

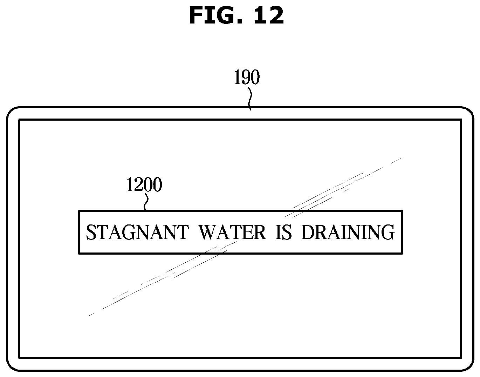

FIG. 12 is a view illustrating a case in which the water purifier 1 displays progress of a drainage operation through the display device 190 according to one embodiment.

Referring to FIG. 12, in a case in which a cleaning operation such as the stagnant water discharge operation or the sterilizing operation is performed, the controller 150 according to one embodiment may control the display device 190 to display cleaning operation information 1200.

Here, the cleaning operation information 1200 may include information related to the cleaning operation, such as whether the cleaning operation is performed, progress of the cleaning operation, and history of performing the cleaning operation.

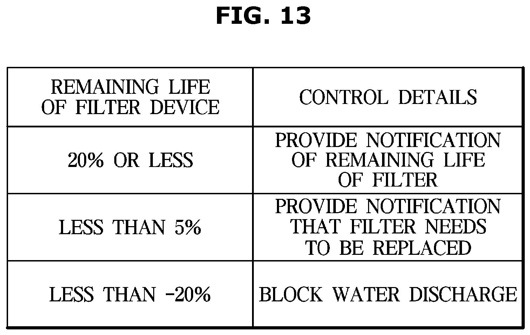

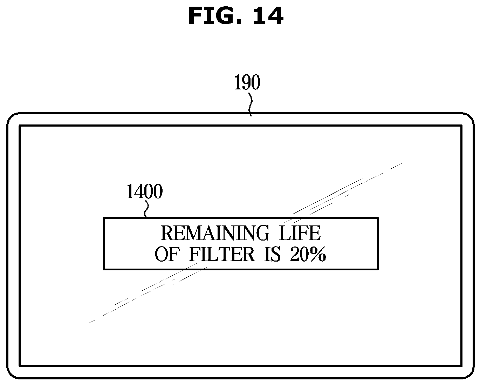

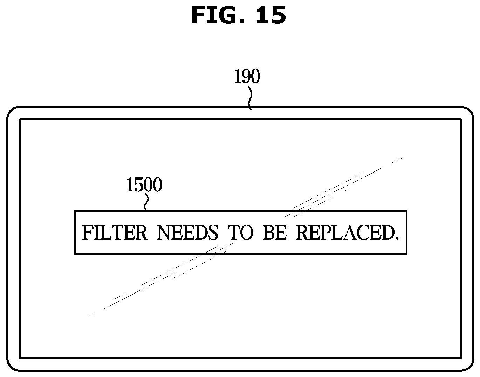

FIG. 13 is a view for describing a case in which the water purifier 1 operates according to the remaining life of the filter device 30 according to one embodiment, FIG. 14 is a view illustrating a case in which the water purifier 1 provides a notification of the remaining life of the filter device 30 according to one embodiment, and FIG. 15 is a view illustrating a case in which the water purifier 1 provides a notification of a need to replace the filter device 30 according to one embodiment.

Referring to FIG. 13, in response to the remaining life of the filter device 30 being less than or equal to a first set value (e.g., 20%), the controller 150 according to one embodiment may control the display device 190 to display the remaining life of the filter device 30.

That is, in response to the remaining life of the filter device 30 being less than or equal to the first set value (e.g., 20%), the water purifier 1 may, as illustrated in FIG. 14, display through the display device 190 a message 1400 indicating the remaining life of the filter device 30 (e.g., 20%).

In this way, a user may recognize in advance that not much remaining life of the filter device 30 is left and may prepare for replacement of the filter device 30 before no more remaining life of the filter device 30 is left.

Here, according to embodiments, in a situation in which the remaining life of the filter device 30 is decreased to less than or equal to the first set value, the water purifier 1 may display through the display device 190 the message 1400 indicating the remaining life of the filter device 30, every time the remaining life of the filter device 30 decreases by a predetermined percentage (e.g., 5%).

According to embodiments, the water purifier 1 may always display the remaining life of the filter device 30, regardless of the actual value of the remaining life of the filter device 30.

Also, according to embodiments, in response to the remaining life of the filter device 30 being less than or equal to the first set value (e.g., 20%), the water purifier 1 may control the communication device 130 to transmit to a user terminal (not illustrated) a message indicating the remaining life of the filter device 30.

Also, in response to the remaining life of the filter device 30 being less than or equal to a second set value (e.g., 5%), the controller 150 according to one embodiment may control the display device 190 to display a message notifying a user that replacement of the filter device 30 is necessary. Here, the second set value may be a value lower than the first set value.

That is, in response to the remaining life of the filter device 30 being less than or equal to the second set value (e.g., 5%), the water purifier 1 may, as illustrated in FIG. 15, display through the display device 190 a message 1500 notifying a user that replacement of the filter device 30 is necessary.

In this way, a user may intuitively recognize that replacement of the filter device 30 is necessary and may prepare for the replacement of the filter device 30 before no more remaining life of the filter device 30 is left.

Here, according to embodiments, in a case in which no more remaining life of the filter device 30 is left, the water purifier 1 may display through the display device 190 a message indicating that the filter device 30 needs to be replaced immediately.

Also, according to embodiments, in response to the remaining life of the filter device 30 being less than or equal to the second set value (e.g., 5%), the water purifier 1 may control the communication device 130 to transmit to the user terminal a message notifying a user that replacement of the filter device 30 is necessary.

Also, in response to the remaining life of the filter device 30 being less than or equal to a third set value (e.g., -20%), the controller 150 according to one embodiment may block water discharge. Here, the third set value may be a value lower than the second set value and may be a value less than or equal to 0%.

That is, in response to the remaining life of the filter device 30 being less than or equal to the third set value, the water purifier 1 may determine that the filter device 30 is not able to fulfill its filtering function anymore and may control a valve to block water discharge. For example, the water purifier 1 may control at least one of the water discharge valve 165, the raw water valve 166, and the clean water valve 164 to block water discharge.

Also, in a case in which the controller 150 according to one embodiment receives information on an occurrence of contamination in the raw water as the external environment information through the communication device 130, the controller 150 may block water discharge.

That is, in response to recognizing that contamination has occurred in the raw water, the water purifier 1 may determine that clean water is not able to be discharged anymore and may control a valve to block discharge of clean water. For example, the water purifier 1 may control at least one of the water discharge valve 165, the raw water valve 166, and the clean water valve 164 to block discharge of clean water.

However, according to embodiments, the water purifier 1 may control a normal open type high pressure solenoid (NOS) valve, in addition to the water discharge valve 165, the raw water valve 166, and the clean water valve 164, to block discharge of clean water.

Hereinafter, an embodiment relating to a method of controlling the water purifier 1 according to one aspect will be described. The water purifier 1 according to the above-described embodiment may be used in the method of controlling the water purifier 1. Therefore, the content described above with reference to FIGS. 1 to 15 may identically apply to the method of controlling the water purifier 1.

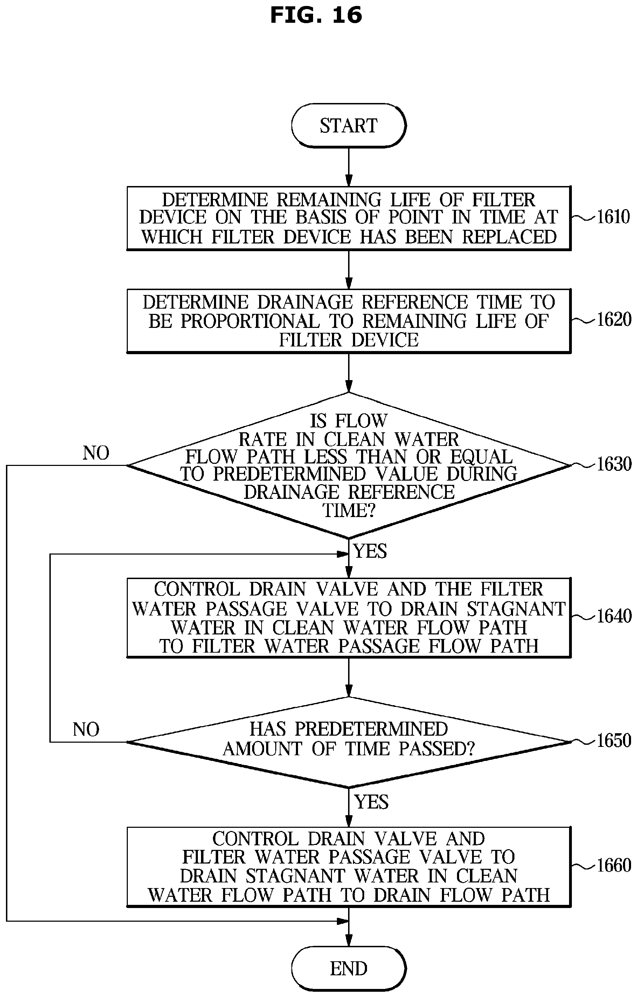

FIG. 16 is a flowchart of a case in which the drainage operation is performed in the method of controlling the water purifier 1 according to one embodiment.

Referring to FIG. 16, the water purifier 1 according to one embodiment may determine the remaining life of the filter device 30 on the basis of a point in time at which the filter device 30 has been replaced (1610).

According to embodiments, the controller 150 may determine a ratio (%) between a value obtained by subtracting, from the entire life of the filter device 30, an amount of time elapsed from a point in time at which the filter device 30 has been replaced and the entire life of the filter device 30 as the remaining life of the filter device 30.

Also, according to embodiments, the controller 150 may determine a clean water amount L which is obtained by subtracting, from an amount of available clean water in the filter device 30, an amount of clean water that corresponds to an amount of time elapsed from a point in time at which the filter device 30 has been replaced as the remaining life of the filter device 30, or may determine a ratio (%) between a clean water amount obtained by subtracting, from an amount of available clean water in the filter device 30, an amount of clean water that corresponds to an amount of time elapsed from a point in time at which the filter device 30 has been replaced and the amount of available clean water in the filter device 30 as the remaining life of the filter device 30.

The water purifier 1 according to one embodiment may determine the drainage reference time to be proportional to the remaining life of the filter device 30 (1620).

That is, the drainage reference time may shorten with a decrease in the remaining life of the filter device 30. In other words, as time passes after the filter device 30 is replaced, the drainage reference time may shorten, and accordingly, the possibility that the stagnant water discharge operation is performed may increase.

In a case in which the flow rate in the clean water flow path 20 is less than or equal to a predetermined value during the drainage reference time (yes in 1630), the water purifier 1 according to one embodiment may control the drain valve 161 and the filter water passage valve 162 to drain the stagnant water in the clean water flow path 20 to the filter water passage flow path 60 (1640).

Specifically, the controller 150 may open the raw water valve 166 and the filter water passage valve 162 to drain the stagnant water to the filter water passage flow path 60 and may close the drain valve 161, the sterilizing water valve 163, and the clean water valve 164. In this case, the stagnant water stagnating in the raw water flow path 10 and the clean water flow path 20 may be discharged through the drain port 40 on the basis of the pressure of the raw water. Here, the stagnant water discharged to the filter water passage flow path 60 may pass through the membrane filter of the filter device 30 and thus remove impurities from the membrane filter.

In a case in which a predetermined amount of time passes after controlling the drain valve 161 and the filter water passage valve 162 to drain the stagnant water in the clean water flow path 20 to the filter water passage flow path 60 (yes in 1650), the water purifier 1 according to one embodiment may control the drain valve 161 and the filter water passage valve 162 to drain the stagnant water in the clean water flow path 20 to the drain flow path 50 (1660).

Specifically, the controller 150 closes the filter water passage valve 162 and opens the raw water valve 166, the drain valve 161, and the clean water valve 164 to allow the stagnant water in the clean water flow path 20 to flow to the drain flow path 50 and be discharged. Here, the controller 150 may close the water discharge valve 165 and may, according to embodiments, also close the sterilizing water valve 163.

In this way, in the case of discharging the stagnant water, the water purifier 1 may change, in stages, a flow path through which the stagnant water is drained and thus prevent contamination at the front end of the membrane filter 35 from spreading in a chain to the membrane filter 35 and the post-carbon filter.

That is, the water purifier 1 may primarily discharge impurities at the front end of the membrane filter 35 through the filter water passage flow path 60 connected to the membrane filter 35 and then may secondarily discharge the stagnant water that has passed through the entire filter device 30 including the post-carbon filter.

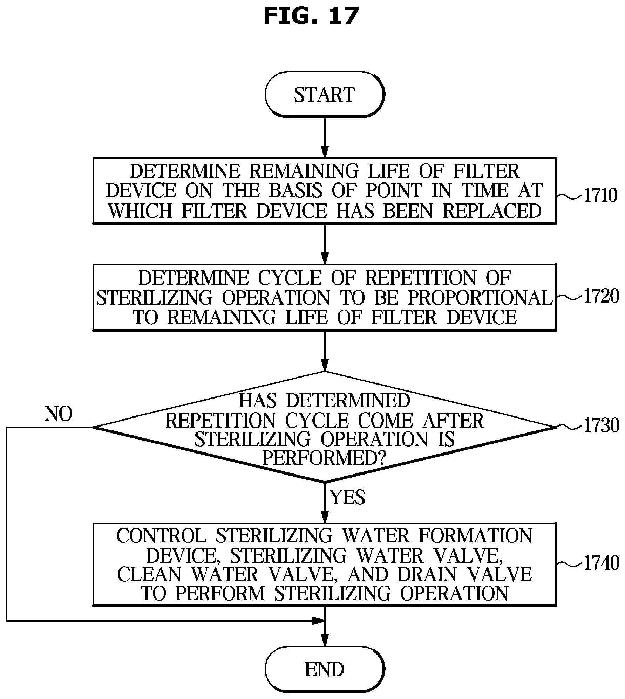

FIG. 17 is a flowchart of a case in which the sterilizing operation is performed in the method of controlling the water purifier 1 according to one embodiment.

Referring to FIG. 17, the water purifier 1 according to one embodiment may determine the remaining life of the filter device 30 on the basis of a point in time at which the filter device 30 has been replaced (1710) and may determine the cycle of repetition of the sterilizing operation to be proportional to the remaining life of the filter device 30 (1720).

Immediately after the filter device 30 is replaced, the accumulation of foreign matter or the growth of microorganisms is not enough to require sterilization, and thus the effect of sterilization is insignificant. In this case, considering that the life of the sterilizing water formation device 170 is limited, performing sterilization may be seen as repeating an unnecessary operation.

On the other hand, at a point in time at which the filter device 30 needs to be replaced due to an elapse of a large amount of time after the filter device 30 is replaced, since the amount of foreign matter is large and an environment favorable for the growth of microorganisms is created, more frequent sterilization may be necessary.

Accordingly, according to embodiments, the controller 150 may determine the cycle for repeating the sterilizing operation on the basis of the remaining life of the filter device 30. Specifically, the controller 150 may determine the cycle of repetition of the sterilizing operation to be proportional to the remaining life of the filter device 30.

That is, the cycle of repetition of the sterilizing operation may shorten with a decrease in the remaining life of the filter device 30. In other words, the cycle of repetition of the sterilizing operation may shorten as more time passes after the filter device 30 is replaced, and accordingly, the sterilizing operation may be repeated in a shorter cycle with a decrease in the remaining life of the filter device 30.

In a case in which a new repetition cycle comes after the sterilizing operation is performed (yes in 1730), the water purifier 1 according to one embodiment may control the sterilizing water formation device 170, the sterilizing water valve 163, the clean water valve 164, and the drain valve 161 to perform the sterilizing operation (1740).

In this way, the controller 150 may control the sterilizing water formation device 170, the sterilizing water valve 163, the clean water valve 164, and the drain valve 161 to perform the sterilizing operation in which the sterilizing water is formed in consideration of the remaining life of the filter device 30 and passes through the clean water flow path 20 and the drain flow path 50.

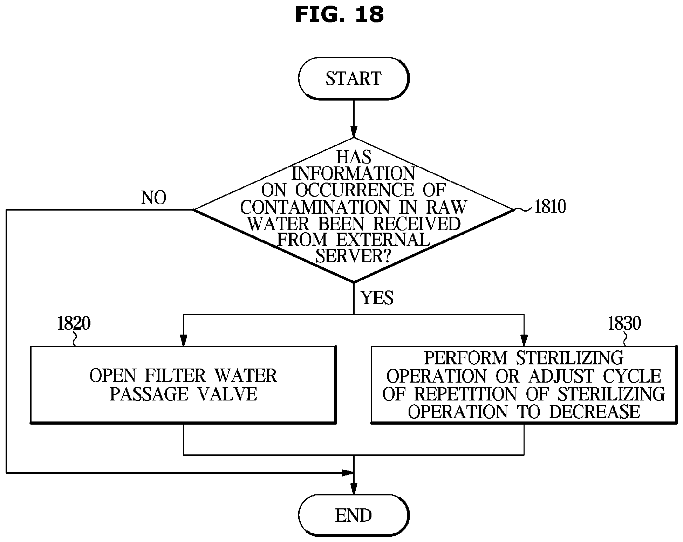

FIG. 18 is a flowchart of a case in which the filter water passage valve 162 is controlled on the basis of data from an external server in the method of controlling the water purifier 1 according to one embodiment.

Referring to FIG. 18, in response to receiving information on an occurrence of contamination in the raw water from an external server (yes in 1810), the water purifier 1 according to one embodiment may open the filter water passage valve 162 (1820).

That is, in a case in which the controller 150 receives information on an occurrence of contamination in the raw water from an external server (not illustrated) through the communication device 130, the controller 150 may control the filter water passage valve 162 to open the filter water passage flow path 60.

Specifically, in a case in which the controller 150 receives information on an occurrence of contamination in the raw water (e.g., an occurrence of rust in tap water, an occurrence of green algae in a water supply source, introduction of contaminants into tap water, etc.), from an external server managing raw water such as tap water (e.g., a water resources corporation server), the controller 150 may open the filter water passage valve 162 to allow the raw water to pass through the filter water passage flow path 60.

In this way, in response to receiving information on contamination in the raw water, the water purifier 1 may open the filter water passage valve 162 so that impurities accumulated in the membrane filter 35 of the filter device 30 are removed by the raw water, and in this way, the water purifier 1 can prevent a flow rate decrease and water purification performance drop which may occur due to the filter device 30 being blocked.

Also, in response to receiving information on an occurrence of contamination in the raw water from an external server (yes in 1810), the water purifier 1 according to one embodiment may perform the sterilizing operation or adjust the cycle of repetition of the sterilizing operation to decrease (1830).

In this way, even in a case in which biological contamination such as green algae formation occurs in the raw water, the water purifier 1 may provide the sterilizing operation immediately or repeat the sterilizing operation in a short cycle, thus keeping the inside of the water purifier 1 clean.

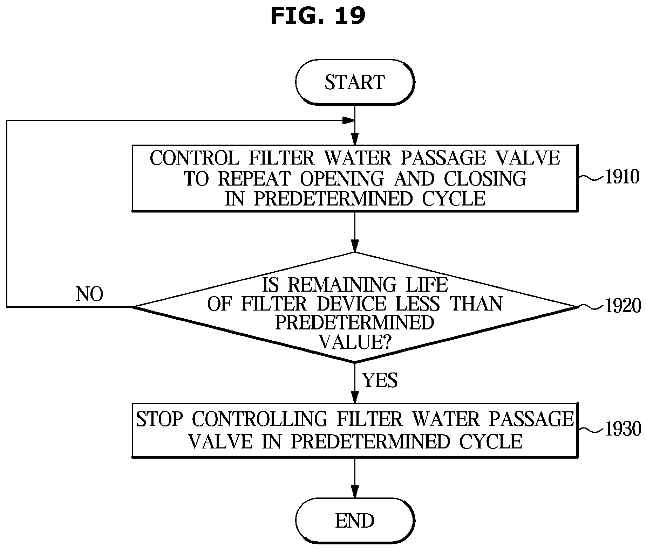

FIG. 19 is a flowchart of a case in which the filter water passage valve 162 is controlled according to the remaining life of the filter device 30 in the method of controlling the water purifier 1 according to one embodiment.

Referring to FIG. 19, the water purifier 1 according to one embodiment may control the filter water passage valve 162 to repeat opening and closing in a predetermined cycle (1910).

That is, according to embodiments, the controller 150 may repeat opening and closing of the filter water passage valve 162 in a predetermined cycle to periodically remove impurities accumulated in the membrane filter 35 of the filter device 30. In this way, since the impurities in the membrane filter 35 may be periodically removed, the life of the filter device 30 can be extended.

However, in a situation in which the flow rate of clean water which passes through the filter device 30 and is transferred to the water discharge nozzle 25 decreases according to the life of the filter device 30, the water purifier 1 may, in response to the remaining life of the filter device 30 being less than a predetermined value (e.g., 30%) (yes in 1920), stop controlling the filter water passage valve 162 in the predetermined cycle (1930) in order to prevent a further decrease in the flow rate due to the filter water passage valve 162 being opened. That is, the water purifier 1 may close the filter water passage valve 162. In this way, the water purifier 1 may ensure the flow rate of the clean water even in a situation in which the remaining life of the filter device 30 is shortened.

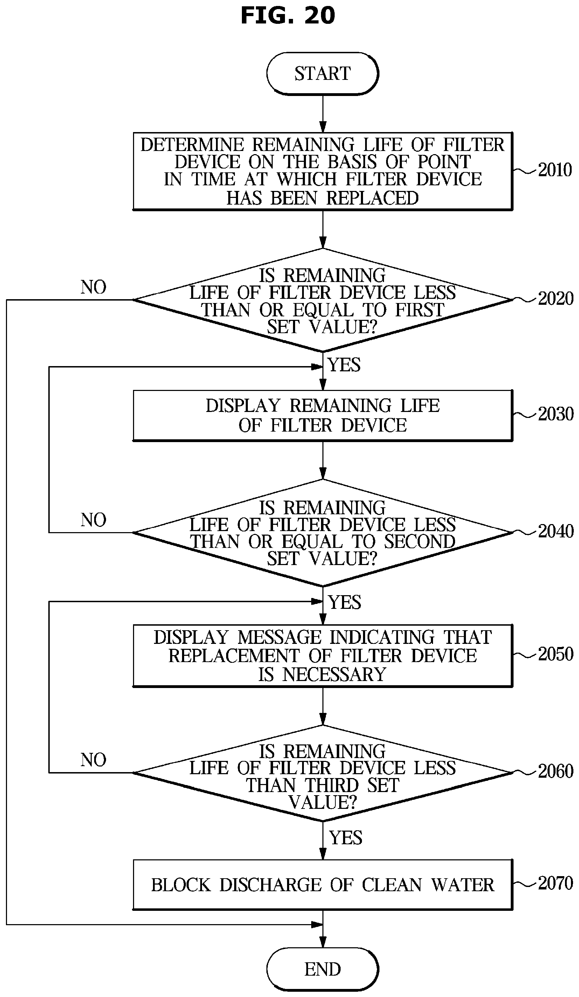

FIG. 20 is a flowchart of a case in which an operation is performed according to the remaining life of the filter device 30 in the method of controlling the water purifier 1 according to one embodiment.

Referring to FIG. 20, the water purifier 1 according to one embodiment may determine the remaining life of the filter device 30 on the basis of a point in time at which the filter device 30 has been replaced (2010) and may, in response to the remaining life of the filter device 30 being less than or equal to a first set value (e.g., 20%) (yes in 2020), display the remaining life of the filter device 30 (2030).

That is, in response to the remaining life of the filter device 30 being less than or equal to the first set value (e.g., 20%), the water purifier 1 may display through the display device 190 the message 1400 indicating the remaining life of the filter device 30 (e.g., 20%).

In this way, a user may recognize in advance that not much remaining life of the filter device 30 is left and may prepare for replacement of the filter device 30 before no more remaining life of the filter device 30 is left.

Also, in response to the remaining life of the filter device 30 being less than or equal to a second set value (e.g., 5%) (yes in 2040), the water purifier 1 may display a message indicating that replacement of the filter device 30 is necessary (2050). Here, the second set value may be a value lower than the first set value.

That is, in response to the remaining life of the filter device 30 being less than or equal to the second set value (e.g., 5%), the water purifier 1 may display through the display device 190 the message 1500 notifying that replacement of the filter device 30 is necessary.

In this way, a user may intuitively recognize that replacement of the filter device 30 is necessary and may prepare for the replacement of the filter device 30 before no more remaining life of the filter device 30 is left.

Here, according to embodiments, in a case in which no more remaining life of the filter device 30 is left, the water purifier 1 may display through the display device 190 a message indicating that the filter device 30 needs to be replaced immediately.

Also, in response to the remaining life of the filter device 30 being less than or equal to a third set value (e.g., -20%) (yes in 2060), the water purifier 1 may block discharge of clean water (2070). Here, the third set value may be a value lower than the second set value and may be a value less than or equal to 0%.

That is, in response to the remaining life of the filter device 30 being less than or equal to the third set value, the water purifier 1 may determine that the filter device 30 is not able to fulfill its filtering function anymore and may control a valve to block water discharge. For example, the water purifier 1 may control at least one of the water discharge valve 165, the raw water valve 166, and the clean water valve 164 to block water discharge.

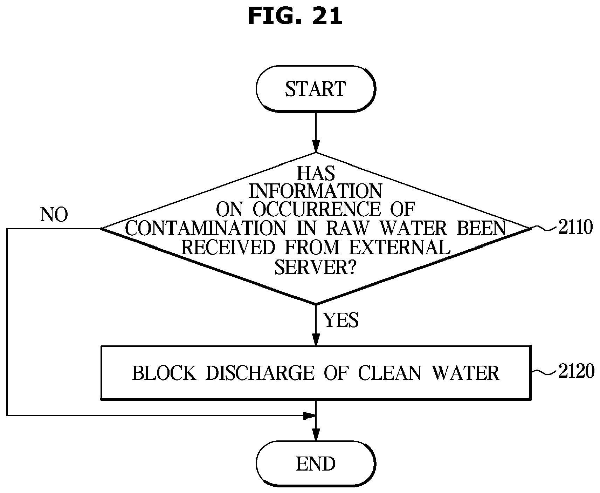

FIG. 21 is a flowchart of a case in which discharge of clean water is blocked according to external environment information in the method of controlling the water purifier 1 according to one embodiment.

Referring to FIG. 21, in response to receiving information on an occurrence of contamination in the raw water from an external server (yes in 2110), the water purifier 1 according to one embodiment may block discharge of clean water (2120).

That is, in response to recognizing that contamination has occurred in the raw water, the water purifier 1 may determine that clean water is not able to be discharged anymore and may control a valve to block discharge of clean water. For example, the water purifier 1 may control at least one of the water discharge valve 165, the raw water valve 166, and the clean water valve 164 to block discharge of clean water.

Meanwhile, the embodiments disclosed herein may be implemented in the form of a recording medium that stores computer-executable instructions. The instructions may be stored in the form of a program code, and when executed by a processor, the instructions may generate a program module and perform operations of the embodiments disclosed herein. The recording medium may be implemented as a computer-readable recording medium.

The computer-readable recording medium may include all types of recording media in which computer-decodable instructions are stored. Examples of the computer-readable recording medium may include a read-only memory (ROM), a random access memory (RAM), a magnetic tape, a magnetic disk, a flash memory, and an optical data storage.

The embodiments disclosed herein have been described above with reference to the accompanying drawings. Those of ordinary skill in the art to which the present invention pertains should understand that the present invention may be carried out in forms different from the embodiments disclosed herein even without changing the technical idea or essential features of the present invention, which is defined in the claims. The embodiments disclosed herein are merely illustrative and should not be interpreted as limiting.

## Claims

1. A water purifier (1) comprising:
a raw water flow path (10) into which raw water is introduced from the outside;
a clean water flow path (20) connected to the raw water flow path (10) and having a water discharge nozzle (25) disposed at an end thereof;
a filter device (30) disposed in the clean water flow path (20), and which may include a plurality of filters;
a drain port (40);
a drain flow path (50) branched off from the clean water flow path (20), and having one end connected between the filter device (30) and the water discharge nozzle (25) and an other end connected to the drain port (40) to drain water in the clean water flow path (20) to the outside;
a drain valve (161) configured to open or close the drain flow path (50); and
a controller (150) configured to determine a remaining life of the filter device (30) based on a point in time at which the filter has been replaced, and control the drain valve (161) to perform a cleaning operation based on the determined remaining life of the filter device (30).

2. The water purifier of claim 1, further comprising a flow rate sensor configured to detect a flow rate of water flowing in the clean water flow path,
wherein, in response to determining that the flow rate in the clean water flow path is less than or equal to a predetermined value during a drainage reference time, the controller controls the drain valve to discharge stagnant water and perform the cleaning operation.

3. The water purifier (1) of claim 2, wherein the drainage reference time is proportional to the remaining life of the filter device, and the controller (150) adjusts the drainage reference time to decrease in response to a decrease in the remaining life of the filter device (30).

4. The water purifier (1) of claim 3, wherein the controller (150) adjusts the drainage reference time to decrease in stages according to the remaining life of the filter device (30).

5. The water purifier (1) of claim 3, further comprising:
a filter water passage flow path (60) which includes one end connected to the filter device and an other end connected to the drain port (40) and through which raw water including impurities from the filter is drained; and
a filter water passage valve (162) which is configured to open or close the filter water passage flow path (60).

6. The water purifier (1) of claim 5, wherein, in response to determining that the flow rate in the clean water flow path (20) is less than or equal to a predetermined value during the drainage reference time, the controller (150) controls the drain valve (161) and the filter water passage valve (162) to drain stagnant water in the clean water flow path (20) to the filter water passage flow path (60) during a predetermined amount of time and controls the drain valve (161) and the filter water passage valve (162) to drain the stagnant water in the clean water flow path (20) to the drain flow path (50) after the predetermined amount of time has elapsed.

7. The water purifier (1) of claim 5, wherein the controller (150) controls the filter water passage valve (162) to repeat opening and closing of the filter water passage flow path (60) in a predetermined cycle, and, in response to determining that the remaining life of the filter device is less than a predetermined value in the predetermined cycle, the controller (150) controls the filter water passage valve (162) to stop the repeating of opening and closing of the filter water passage flow path (60) in the predetermined cycle.

8. The water purifier (1) of claim 2, further comprising:
a sterilizing water flow path (70) which includes one end connected to the raw water flow path (10) and an other end connected to the clean water flow path (20) between the filter device and the water discharge nozzle (25) so that the raw water bypasses the filter;
a sterilizing water formation device (170) disposed in the sterilizing water flow path (70), and configured to treat the raw water and form sterilizing water;
a sterilizing water valve (163) which is configured to open or close the sterilizing water flow path (70); and
a clean water valve (164) which is disposed in the clean water flow path (20) and configured to adjust introduction of the raw water into the filter device.

9. The water purifier (1) of claim 8, wherein the controller (150) controls the sterilizing water formation device (170), the sterilizing water valve (163), the clean water valve (164), and the drain valve (161) to perform a sterilizing operation in which the sterilizing water is formed and passes through the clean water flow path (20) and the drain flow path (50).

10. The water purifier (1) of claim 9, wherein the controller (150) determines a cycle for repeating the sterilizing operation to be proportional to the remaining life of the filter device.

11. The water purifier (1) of claim 10, wherein the controller (150) determines a cycle for repeating the sterilizing operation to be shorten in response to a decrease in the remaining life of the filter device.

12. The water purifier (1) of claim 11, wherein, in response to determining that the flow rate in the clean water flow path (20) is lower than or equal to a reference flow rate during a drainage of water through the water discharge nozzle (25) after an elapse of time corresponding to the determined cycle after the sterilizing operation is performed, the controller (150) re-performs the sterilizing operation.

13. The water purifier (1) of any one of the preceding claims, further comprising a display device (190),
wherein the controller (150) is further configured to, in response to determining that the remaining life of the filter device is less than or equal to a first set value, control the display device (190) to display the remaining life of the filter device.

14. The water purifier (1) of claim 13, wherein the controller (150) is further configured to, in response to determining that the remaining life of the filter device is less than or equal to a second set value, control the display device (190) to display the message notifying for a replacement of the filter device, and
wherein the second set value is lower than the first set value.

15. The water purifier (1) of claim 14, wherein the controller (150) is further configured to, in response to determining that the remaining life of the filter device is less than or equal to a third set value, control a valve to block water discharge, and wherein the third set value is lower than the second set value.

## Patentansprüche

1. Wasserreiniger (1), umfassend:
einen Rohwasserströmungspfad (10), in den Rohwasser von außen eingeleitet wird;
einen Reinwasserströmungspfad (20), der mit dem Rohwasserströmungspfad (10) verbunden ist und eine Wasserauslassdüse (25) aufweist, die an einem Ende davon angeordnet ist;
eine Filtervorrichtung (30), die im Reinwasserströmungspfad (20) angeordnet ist und mehrere Filter enthalten kann;
einen Ablaufanschluss (40);
einen Ablaufströmungspfad (50), der vom Reinwasserströmungspfad (20) abgezweigt ist und wobei ein Ende zwischen der Filtervorrichtung (30) und der Wasserauslassdüse (25) verbunden ist und ein anderes Ende mit dem Ablaufanschluss (40) verbunden ist, um Wasser im Reinwasserströmungspfad (20) nach außen abzulassen;
ein Ablaufventil (161), das dafür eingerichtet ist, den Ablaufströmungspfad (50) zu öffnen oder zu schließen; und
eine Steuerung (150), die dafür eingerichtet ist, eine verbleibende Lebensdauer der Filtervorrichtung (30) basierend auf einem Zeitpunkt zu bestimmen, zu dem der Filter ausgetauscht wurde, und das Ablaufventil (161) zu steuern, um einen Reinigungsvorgang basierend auf der bestimmten verbleibenden Lebensdauer der Filtervorrichtung (30) durchzuführen.

2. Wasserreiniger nach Anspruch 1, ferner umfassend einen Durchflusssensor, der dafür eingerichtet ist, eine Durchflussrate von Wasser zu erfassen, das im Reinwasserströmungspfad fließt,
wobei in Reaktion auf das Bestimmen, dass die Durchflussrate im Reinwasserströmungspfad während einer Ablaufreferenzzeit kleiner oder gleich einem vorbestimmten Wert ist, die Steuerung das Ablaufventil steuert, um Stauwasser abzulassen und den Reinigungsvorgang durchzuführen.

3. Wasserreiniger (1) nach Anspruch 2, wobei die Ablaufreferenzzeit proportional zur verbleibenden Lebensdauer der Filtervorrichtung ist und wobei die Steuerung (150) die Ablaufreferenzzeit so anpasst, dass sich die Ablaufreferenzzeit in Reaktion auf eine Verringerung der verbleibenden Lebensdauer der Filtervorrichtung (30) verringert.

4. Wasserreiniger (1) nach Anspruch 3, wobei die Steuerung (150) die Ablaufreferenzzeit so anpasst, dass sich die Ablaufreferenzzeit stufenweise gemäß der verbleibenden Lebensdauer der Filtervorrichtung (30) verringert.

5. Wasserreiniger (1) nach Anspruch 3, ferner umfassend:
einen Filterwasserdurchgangsströmungspfad (60), der ein mit der Filtervorrichtung verbundenes Ende und ein anderes mit dem Ablaufanschluss (40) verbundenes Ende aufweist und durch den Rohwasser einschließlich Verunreinigungen aus dem Filter abgelassen wird; und
ein Filterwasserdurchgangsventil (162), das dafür eingerichtet ist, den Filterwasserdurchgangsströmungspfad (60) zu öffnen oder zu schließen.

6. Wasserreiniger (1) nach Anspruch 5, wobei in Reaktion auf das Bestimmen, dass die Durchflussrate im Reinwasserströmungspfad (20) während der Ablaufreferenzzeit kleiner oder gleich einem vorbestimmten Wert ist, die Steuerung (150) das Ablaufventil (161) und das Filterwasserdurchgangsventil (162) steuert, um Stauwasser im Reinwasserströmungspfad (20) während einer vorbestimmten Zeitdauer in den Filterwasserdurchgangsströmungspfad (60) abzulassen, und das Ablaufventil (161) und das Filterwasserdurchgangsventil (162) steuert, um das Stauwasser im Reinwasserströmungspfad (20) in den Ablaufströmungspfad (50) abzulassen, nachdem die vorbestimmte Zeitdauer verstrichen ist.

7. Wasserreiniger (1) nach Anspruch 5, wobei die Steuerung (150) das Filterwasserdurchgangsventil (162) steuert, um das Öffnen und Schließen des Filterwasserdurchgangsströmungspfads (60) in einem vorbestimmten Zyklus zu wiederholen, und in Reaktion auf das Bestimmen, dass die verbleibende Lebensdauer der Filtervorrichtung im vorbestimmten Zyklus kleiner als ein vorbestimmter Wert ist, die Steuerung (150) das Filterwasserdurchgangsventil (162) so steuert, dass das Wiederholen des Öffnens und Schließens des Filterwasserdurchgangsströmungspfads (60) im vorbestimmten Zyklus gestoppt wird.

8. Wasserreiniger (1) nach Anspruch 2, ferner umfassend:
einen Sterilisierwasserströmungspfad (70), der ein Ende, das mit dem Rohwasserströmungspfad (10) verbunden ist, und ein anderes Ende aufweist, das mit dem Reinwasserströmungspfad (20) zwischen der Filtervorrichtung und der Wasserauslassdüse (25) verbunden ist, sodass das Rohwasser den Filter umgeht;
eine Sterilisierwasserbildungsvorrichtung (170), die im Sterilisierwasserströmungspfad (70) angeordnet ist und dafür eingerichtet ist, das Rohwasser zu behandeln und Sterilisierwasser zu bilden;
ein Sterilisierwasserventil (163), das dafür eingerichtet ist, den Sterilisierwasserströmungspfad (70) zu öffnen oder zu schließen; und
ein Reinwasserventil (164), das im Reinwasserströmungspfad (20) angeordnet ist und dafür eingerichtet ist, das Einleiten des Rohwassers in die Filtervorrichtung einzustellen.

9. Wasserreiniger (1) nach Anspruch 8, wobei die Steuerung (150) die Sterilisierwasserbildungsvorrichtung (170), das Sterilisierwasserventil (163), das Reinwasserventil (164) und das Ablaufventil (161) steuert, um einen Sterilisiervorgang durchzuführen, bei dem das Sterilisierwasser gebildet wird und durch den Reinwasserströmungspfad (20) und den Ablaufströmungspfad (50) fließt.

10. Wasserreiniger (1) nach Anspruch 9, wobei die Steuerung (150) einen Zyklus zum Wiederholen des Sterilisiervorgangs so bestimmt, dass der Zyklus zum Wiederholen des Sterilisiervorgangs proportional zur verbleibenden Lebensdauer der Filtervorrichtung ist.

11. Wasserreiniger (1) nach Anspruch 10, wobei die Steuerung (150) bestimmt, dass ein Zyklus zum Wiederholen des Sterilisiervorgangs in Reaktion auf eine Verringerung der verbleibenden Lebensdauer der Filtervorrichtung verkürzt wird.

12. Wasserreiniger (1) nach Anspruch 11, wobei in Reaktion auf das Bestimmen, dass die Durchflussrate im Reinwasserströmungspfad (20) während eines Wasserablaufs durch die Wasserauslassdüse (25) nach Verstreichen einer Zeit, die dem bestimmten Zyklus entspricht, nachdem der Sterilisiervorgang durchgeführt wurde, kleiner oder gleich einer Referenzdurchflussrate ist, die Steuerung (150) den Sterilisiervorgang erneut durchführt.

13. Wasserreiniger (1) nach einem der vorhergehenden Ansprüche, ferner umfassend eine Anzeigevorrichtung (190),
wobei die Steuerung (150) ferner dafür eingerichtet ist, in Reaktion auf das Bestimmen, dass die verbleibende Lebensdauer der Filtervorrichtung kleiner oder gleich einem ersten eingestellten Wert ist, die Anzeigevorrichtung (190) zu steuern, um die verbleibende Lebensdauer der Filtervorrichtung anzuzeigen.

14. Wasserreiniger (1) nach Anspruch 13, wobei die Steuerung (150) ferner dafür eingerichtet ist, in Reaktion auf das Bestimmen, dass die verbleibende Lebensdauer der Filtervorrichtung kleiner oder gleich einem zweiten eingestellten Wert ist, die Anzeigevorrichtung (190) zu steuern, um die Nachricht anzuzeigen, die über einen Austausch der Filtervorrichtung benachrichtigt, und
wobei der zweite eingestellte Wert niedriger als der erste eingestellte Wert ist.

15. Wasserreiniger (1) nach Anspruch 14, wobei die Steuerung (150) ferner dafür eingerichtet ist, in Reaktion auf das Bestimmen, dass die verbleibende Lebensdauer der Filtervorrichtung kleiner oder gleich einem dritten eingestellten Wert ist, ein Ventil so zu steuern, dass der Wasserauslass blockiert wird, und
wobei der dritte eingestellte Wert niedriger als der zweite eingestellte Wert ist.

## Revendications

1. Purificateur d'eau (1) comprenant :
un chemin d'écoulement d'eau brute (10) dans lequel l'eau brute est introduite depuis l'extérieur ;
un chemin d'écoulement d'eau propre (20) connecté au chemin d'écoulement d'eau brute (10) et comportant une buse de décharge d'eau (25) disposée à une extrémité de celui-ci ;
un dispositif de filtration (30) disposé dans le chemin d'écoulement d'eau propre (20) et incluant une pluralité de filtres ;
un orifice de drainage (40) ;
un chemin d'écoulement de drainage (50) dérivé du chemin d'écoulement d'eau propre (20), et comportant une extrémité connectée entre le dispositif de filtration (30) et la buse de décharge d'eau (25) et une autre extrémité connectée à l'orifice de drainage (40) pour drainer de l'eau du chemin d'écoulement d'eau propre (20) vers l'extérieur ;
une vanne de drainage (161) configurée pour ouvrir ou fermer le chemin d'écoulement de drainage (50) ; et
un contrôleur (150) configuré pour déterminer une durée de vie restante du dispositif de filtration (30) sur la base d'un moment auquel le filtre a été remplacé, et commander la vanne de drainage (161) à effectuer une opération de nettoyage sur la base de la durée de vie restante déterminée du dispositif de filtration (30).

2. Purificateur d'eau selon la revendication 1, comprenant en outre un capteur de débit configuré pour détecter un débit d'eau circulant dans le chemin d'écoulement d'eau propre,
dans lequel, en réponse à la détermination que le débit dans le chemin d'écoulement d'eau propre est inférieur ou égal à une valeur prédéterminée pendant une durée de référence de drainage, le contrôleur commande la vanne de drainage à décharger de l'eau stagnante et effectuer l'opération de nettoyage.

3. Purificateur d'eau (1) selon la revendication 2, dans lequel la durée de référence de drainage est proportionnel à la durée de vie restante du dispositif de filtration, et le contrôleur (150) ajuste la durée de référence de drainage pour la réduire en réponse à une diminution de la durée de vie restante du dispositif de filtration (30).

4. Purificateur d'eau (1) selon la revendication 3, dans lequel le contrôleur (150) ajuste la durée de référence de drainage pour la réduire par étapes en fonction de la durée de vie restante du dispositif de filtration (30).

5. Purificateur d'eau (1) selon la revendication 3, comprenant en outre :
un chemin d'écoulement de passage d'eau filtrée (60) qui inclut une extrémité connectée au dispositif de filtration et une autre extrémité connectée à l'orifice de drainage (40) et par lequel l'eau brute incluant des impuretés provenant du filtre est drainée ; et
une vanne de passage d'eau filtrée (162) configurée pour ouvrir ou fermer le chemin d'écoulement de passage d'eau filtrée (60).

6. Purificateur d'eau (1) selon la revendication 5, dans lequel, en réponse à la détermination que le débit dans le chemin d'écoulement d'eau propre (20) est inférieur ou égal à une valeur prédéterminée pendant la durée de référence de drainage, le contrôleur (150) commande la vanne de drainage (161) et la vanne de passage d'eau filtrée (162) à drainer la l'eau stagnante du chemin d'écoulement d'eau propre (20) au chemin d'écoulement de passage d'eau filtrée (60) pendant une durée prédéterminée, et commande la vanne de drainage (161) et la vanne de passage d'eau filtrée (162) à drainer l'eau stagnante du chemin d'écoulement d'eau propre (20) au chemin d'écoulement de drainage (50) une fois la durée prédéterminée épuisée.

7. Purificateur d'eau (1) selon la revendication 5, dans lequel le contrôleur (150) commande la vanne de passage d'eau filtrée (162) à répéter l'ouverture et la fermeture du chemin d'écoulement de passage d'eau filtrée (60) dans un cycle prédéterminé, et, en réponse à la détermination que la durée de vie restante du dispositif de filtration est inférieure à une valeur prédéterminée dans le cycle prédéterminé, le contrôleur (150) commande la vanne de passage d'eau filtrée (162) à arrêter la répétition de l'ouverture et de la fermeture du chemin d'écoulement de passage d'eau filtrée (60) dans le cycle prédéterminé.

8. Purificateur d'eau (1) selon la revendication 2, comprenant en outre :
un chemin d'écoulement d'eau stérilisante (70) qui inclut une extrémité connectée au chemin d'écoulement d'eau brute (10) et une autre extrémité connectée au chemin d'écoulement d'eau propre (20) entre le dispositif de filtration et la buse de décharge d'eau (25) de sorte que l'eau brute contourne le filtre ;
un dispositif de formation d'eau stérilisante (170) disposé dans le chemin d'écoulement d'eau stérilisante (70), et configuré pour traiter l'eau brute et former de l'eau stérilisante ;
une vanne d'eau stérilisante (163) qui est configurée pour ouvrir ou fermer le chemin d'écoulement d'eau stérilisante (70) ; et
une vanne d'eau propre (164) qui est disposée dans le chemin d'écoulement d'eau propre (20) et configurée pour ajuster une introduction de l'eau brute vers le dispositif de filtration.

9. Purificateur d'eau (1) selon la revendication 8, dans lequel le contrôleur (150) commande le dispositif de formation d'eau stérilisante (170), la vanne d'eau stérilisante (163), la vanne d'eau propre (164) et la vanne de drainage (161) à effectuer une opération de stérilisation au cours de laquelle l'eau stérilisante est formée et passe par le chemin d'écoulement d'eau propre (20) et le chemin d'écoulement de drainage (50).

10. Purificateur d'eau (1) selon la revendication 9, dans lequel le contrôleur (150) détermine un cycle pour répéter l'opération de stérilisation à être proportionnelle à la durée de vie restante du dispositif de filtration.

11. Purificateur d'eau (1) selon la revendication 10, dans lequel le contrôleur (150) détermine un cycle pour répéter l'opération de stérilisation à raccourcir en réponse à une diminution de la durée de vie restante du dispositif de filtration.

12. Purificateur d'eau (1) selon la revendication 11, dans lequel, en réponse à la détermination que le débit dans le chemin d'écoulement d'eau propre (20) est inférieur ou égal à un débit de référence au cours d'un drainage d'eau par la buse de décharge d'eau (25) une fois le temps correspondant au cycle déterminé épuisé après que l'opération de stérilisation est effectuée, le contrôleur (150) répète l'opération de stérilisation.

13. Purificateur d'eau (1) selon l'une quelconque des revendications précédentes, comprenant en outre un dispositif d'affichage (190),
dans lequel le contrôleur (150) est en outre configuré pour, en réponse à la détermination que la durée de vie restante du dispositif de filtration est inférieure ou égale à une première valeur définie, commander le dispositif d'affichage (190) à afficher la durée de vie restante du dispositif de filtration.

14. Purificateur d'eau (1) selon la revendication 13, dans lequel le contrôleur (150) est en outre configuré pour, en réponse à la détermination que la durée de vie restante du dispositif de filtration est inférieure ou égale à une deuxième valeur définie, commander le dispositif d'affichage (190) à afficher un message notifiant un remplacement du dispositif de filtration, et
dans lequel la deuxième valeur définie est inférieure à la première valeur définie.

15. Purificateur d'eau (1) selon la revendication 14, dans lequel le contrôleur (150) est en outre configuré pour, en réponse à la détermination que la durée de vie restante du dispositif de filtration est inférieure ou égale à une troisième valeur définie, commander une vanne à bloquer la décharge d'eau, et
dans lequel la troisième valeur définie est inférieure à la deuxième valeur définie.
